# EUROPEAN PATENT APPLICATION

(11) **EP 4 451 408 A2**
(43) Date of publication of application: **23.10.2024**
(21) Application number: 24166185.9
(22) Date of filing: 26.03.2024
(51) Int. Cl.: H01M 10/0567, H01M 10/0525, H01M 10/054, H01M 10/42, H01M 4/38, H01M 4/36, H01M 4/587, H01M 10/0568, H01M 10/0569

(54) **ELECTROLYTE FOR SECONDARY BATTERIES, SECONDARY BATTERY, AND ELECTRONIC APPARATUS**

(30) Priority: 30.03.2023 CN 202310323562
(71) Applicant: Ningde Amperex Technology Limited, Ningde City, Fujian Province 352100 (CN)
(72) Inventor: JIAN, Junhua, Ningde City, Fujian Province 352100 (CN); WANG, Xiang, Ningde City, Fujian Province 352100 (CN); GUO, Hefeng, Ningde City, Fujian Province 352100 (CN); TANG, Chao, Ningde City, Fujian Province 352100 (CN)
(74) Representative: Icosa

(57) **Abstract**

An electrolyte includes a non-aqueous organic solvent and an additive A, where the additive A includes a salt composed of anions and cations represented by formula (I); Mi is selected from group IIIA elements, and cations include any one of Li⁺, Na⁺, K⁺, Mg²⁺, Ca²⁺, and Zn²⁺; and based on a mass of the electrolyte, a mass percentage of the additive A is x%, with 0.01 ≤ x ≤ 60. The electrolyte with the additive A included and its mass percentage controlled within the range defined in this application can enhance the stability of the negative electrode interface and the positive electrode interface, reducing the high-temperature gas production of the electrolyte and thereby improving the high-temperature cycling performance and high-temperature storage performance of the secondary battery. Moreover, due to the high ionic conductivity of the fluorine-containing compound formed by the additive A in the interface layer, the kinetic performance of the secondary battery can also be improved.

## Description

### TECHNICAL FIELD

This application relates to the electrochemical field, and in particular, to an electrolyte for secondary batteries, a secondary battery, and an electronic apparatus.

### BACKGROUND

Secondary batteries, such as lithium-ion batteries, are widely used in mobile phones, notebook computers, tablet computers, unmanned aerial vehicles, electric vehicles, electric tools, power storage systems, and the like due to their advantages such as high energy density, miniaturization, and light weight.

The electrolyte has a significant influence on the properties of the positive electrode interface and the negative electrode interface. At high temperatures, the positive and negative electrodes of a lithium-ion battery have significantly enhanced activity and react with the electrolyte, affecting the stability of the positive electrode interface and the negative electrode interface, inducing gas production and other problems, and affecting the high-temperature cycling performance of the secondary batteries.

### SUMMARY

An objective this application is to provide an electrolyte for secondary batteries, a secondary battery, and an electronic apparatus, so as to improve high-temperature cycling performance of secondary batteries. Specific technical solutions are as follows:

A first aspect of this application provides an electrolyte for secondary batteries, including a non-aqueous organic solvent and an additive A, where the additive A includes a salt composed of anions and cations represented by formula (I); 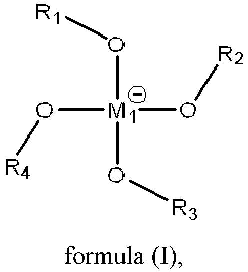 where Mi is selected from group IIIA elements; and Ri to R₄ are each independently selected from Ci-Cs alkyl with at least some hydrogen atoms substituted by fluorine, C₆-C₂₀ aryl with at least some hydrogen atoms substituted by fluorine, C₇-C₂₂ aralkyl with at least some hydrogen atoms substituted by fluorine, C₇-C₂₀ alkylaryl with at least some hydrogen atoms substituted by fluorine, C₇-C₂₀ alkylaryl containing ether bond with at least some hydrogen atoms substituted by fluorine, or C₂-C₁₀ alkyl containing ether bond with at least some hydrogen atoms substituted by fluorine; two adjacent groups in Ri to R₄ are capable of being linked into a ring; the cations comprise any one of Li⁺, Na⁺, K⁺, Mg²⁺, Ca²⁺, and Zn²⁺; and based on a mass of the electrolyte, a mass percentage of the additive A is x%, with 0.01 ≤ x ≤ 60. For example, the mass percentage of the additive A may be 0.01, 0.04, 0.1, 0.5, 0.8, 1, 3, 5, 8, 10, 14, 18, 20, 25, 28, 30, 35, 40, 45, 50, 55, 60, or a range between any two of the above values.

When the electrolyte includes the additive A, the additive A has a relatively high reduction potential and is preferentially reduced in the first charging process of a secondary battery to obtain a group IIIA element. The group IIIA element can form an alloy phase with low activity with a negative electrode active material, thus enhancing the stability of the negative electrode interface. In addition, anions in the additive A, under the action of electric field force, migrate to the positive electrode interface and are oxidatively decomposed into an inert fluorine-containing compound, forming an interface layer at the positive electrode interface. This is conducive to enhancing the stability of the positive electrode interface, reducing the high-temperature gas production of the electrolyte and thereby improving the high-temperature cycling performance and high-temperature storage performance of the secondary battery. Moreover, due to the high ionic conductivity of the fluorine-containing compound formed by the additive A in the interface layer, the kinetic performance of the secondary battery can also be improved. When x is too small, for example, less than 0.01, the percentage of additive A is too small, so that the group IIIA element cannot form an alloy phase with low activity with the negative electrode active material, and a complete interface layer of inert fluorine-containing compound cannot be formed on the surface of the positive electrode. This is not conducive to enhancing the stability of the positive electrode interface and the negative electrode interface, cannot reduce oxidative decomposition and gas production of the electrolyte at high temperatures, and is neither conducive to improving the high-temperature storage performance and high-temperature cycling performance of the secondary battery. When x is too large, for example, greater than 65, the anions and cations in the additive A cannot be dissociated due to excessively high salt concentration so that no enough free-migrating ions can be provided. This is not conducive to improving the high-temperature cycling performance of the secondary battery and leads to excessive viscosity of the electrolyte, hindering the migration of ions (such as lithium ions and sodium ions) in the electrolyte and affecting the kinetic performance of the secondary battery. The electrolyte with the additive A included and its mass percentage controlled within the range defined in this application is conducive to fully dissolving the additive A in the electrolyte and can enhance the stability of the negative electrode interface and the positive electrode interface, reducing the high-temperature gas production of the electrolyte and thereby improving the high-temperature cycling performance and high-temperature storage performance of the secondary battery. Moreover, due to the high ionic conductivity of the fluorine-containing compound formed by the additive A in the interface layer, the kinetic performance of the secondary battery can also be improved.

In this application, the phrase "two adjacent groups in Ri to R₄ are capable of being linked into a ring" means that two adjacent groups in Ri to R₄ are linked by single bonds to form a five-membered, six-membered, seven-membered, or eight-membered heterocycle containing heteroatoms O and Mi, or the like. Alternatively, at least partially fluorinated aryl or fused ring aryl is obtained through a shared chemical bond between two adjacent groups in Ri to R₄, and with O and Mi shown in formula (I), some carbon atoms in the aryl or fused ring aryl can form a five-membered, six-membered, seven-membered, or eight-membered heterocycle containing heteroatoms O and Mi, or the like.

In some embodiments of this application, Mi is selected from Al or B, and the cations include Li⁺. The selection of the Mi element and cations within the above range is conducive for the additive A to have a relatively high reduction potential and be preferentially reductively decomposed in the first charging process of the secondary battery. Al or B can form an alloy phase with low activity with a negative electrode active material, thus enhancing the stability of the negative electrode interface. In addition, anions in the additive A, under the action of electric field force, migrate to the positive electrode interface and are oxidatively decomposed into fluoroaluminate or fluoroborate to form an interface layer. This is conducive to enhancing the stability of the positive electrode interface, reducing the high-temperature gas production of the electrolyte, and thereby improving the high-temperature cycling performance and high-temperature storage performance of the secondary battery. Moreover, due to the high ionic conductivity of fluoroaluminate and fluoroborate formed by the additive A in the interface layer, the kinetic performance of the secondary battery can be improved.

In some embodiments of this application, 0.1 ≤ x ≤ 25. With the value of x controlled within the above range, the stability of the negative electrode interface and the positive electrode interface can be further enhanced, reducing the high-temperature gas production of the electrolyte and thereby improving the high-temperature cycling performance, high-temperature storage performance, and kinetic performance of the secondary battery.

In some embodiments of this application, Ri to R₄ are each independently selected from the following groups:

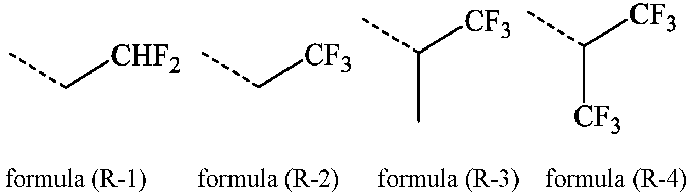

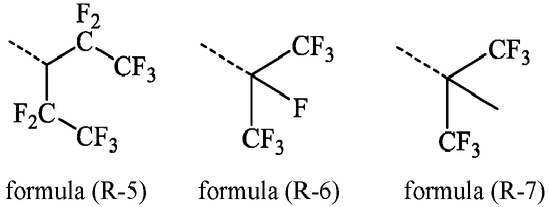

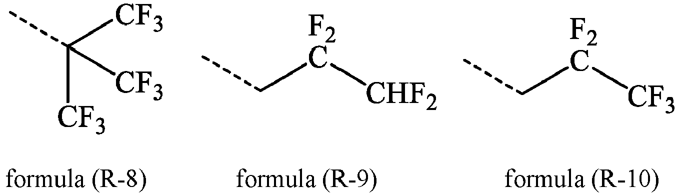

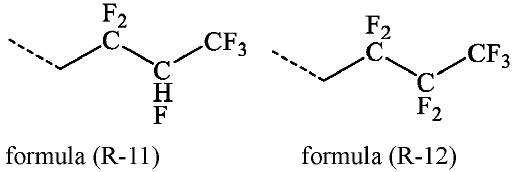

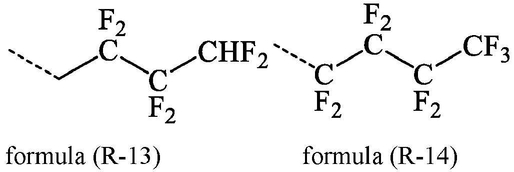

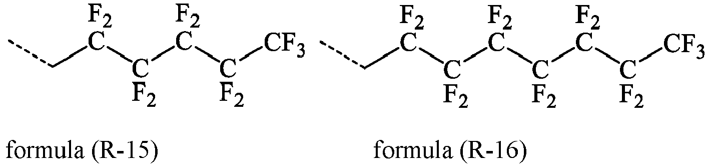

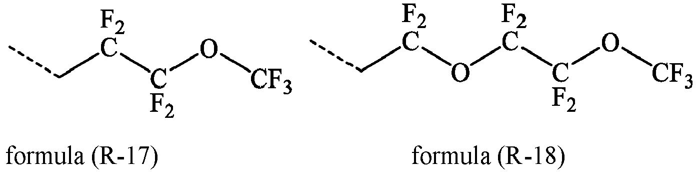

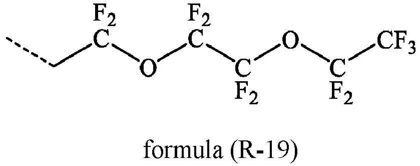

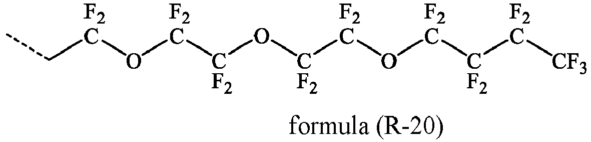

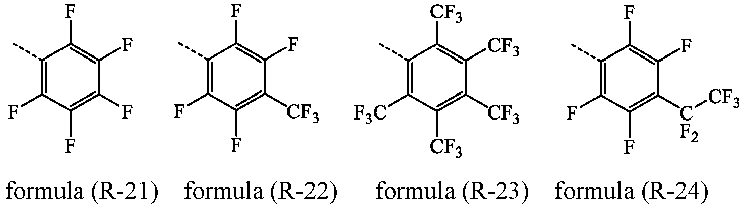

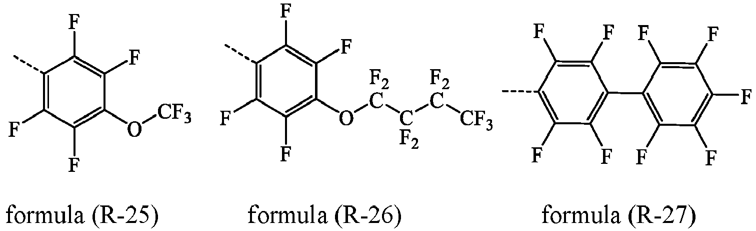

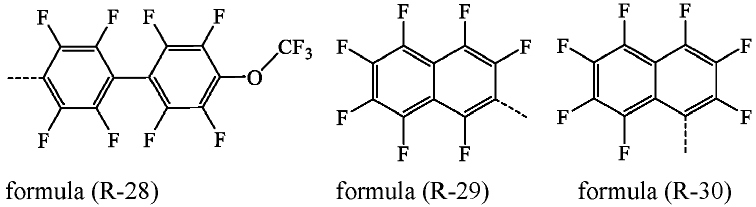

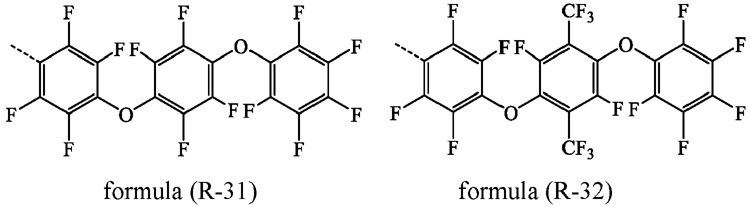

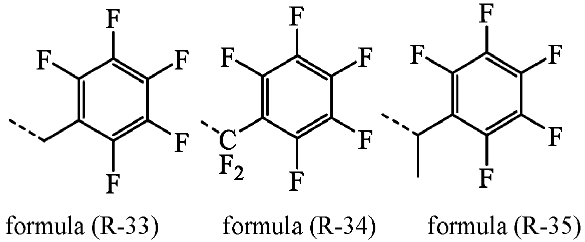

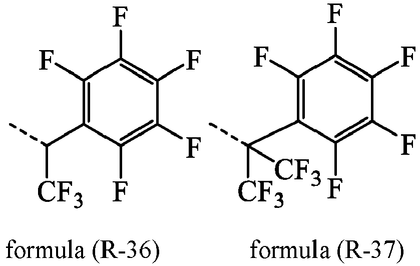

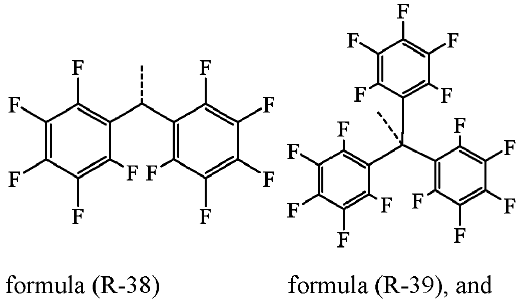

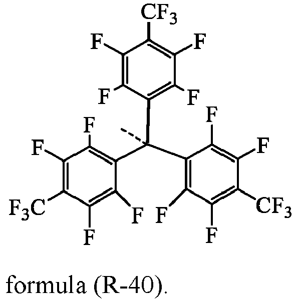

With the application of the electrolyte, including the additive A with groups within the above range, to the secondary battery, the stability of the negative electrode interface and the positive electrode interface can be further enhanced, reducing the high-temperature gas production of the electrolyte and thereby improving the high-temperature cycling performance and high-temperature storage performance of the secondary battery. Moreover, due to the high ionic conductivity of the fluorine-containing compound formed by the additive A in the interface layer, the kinetic performance of the secondary battery can also be improved.

In some embodiments of this application, groups obtained by linking two adjacent groups in R₁ to R₄ into a ring are each independently selected from the following groups:

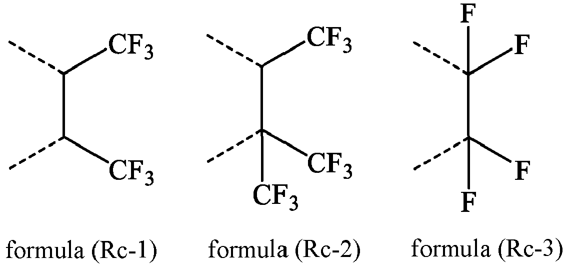

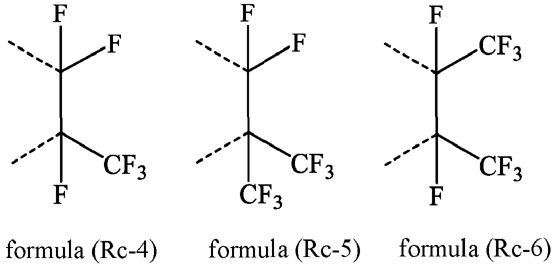

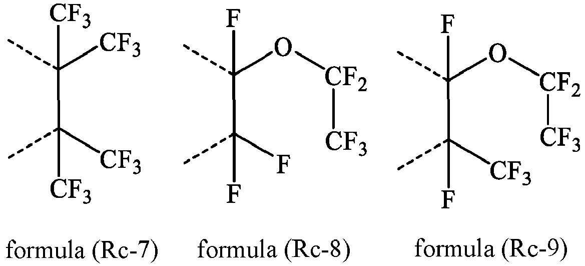

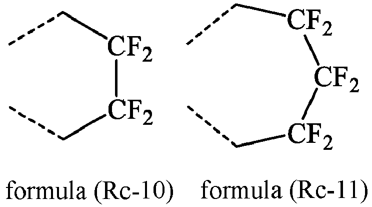

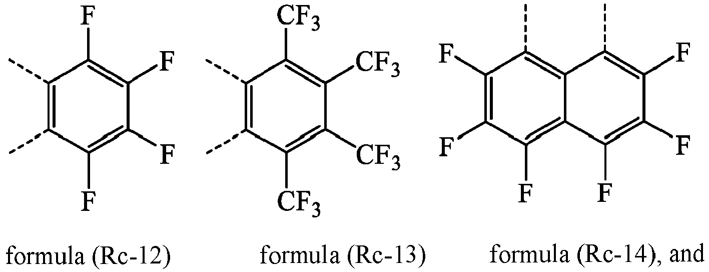

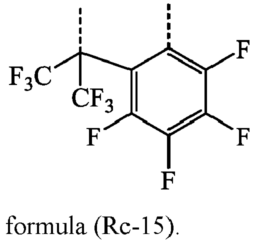

With the application of the electrolyte, including the additive A with groups within the above range, to the secondary battery, the stability of the negative electrode interface and the positive electrode interface can be further enhanced, reducing the high-temperature gas production of the electrolyte and thereby improving the high-temperature cycling performance and high-temperature storage performance of the secondary battery. Moreover, due to the high ionic conductivity of the fluorine-containing compound formed by the additive A in the interface layer, the kinetic performance of the secondary battery can also be improved.

In some embodiments of this application, the anions represented by formula (I) include at least one of the following anions:

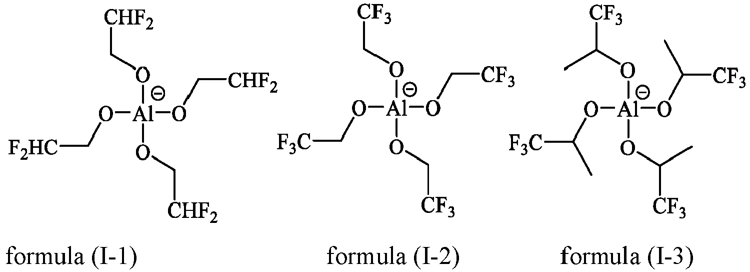

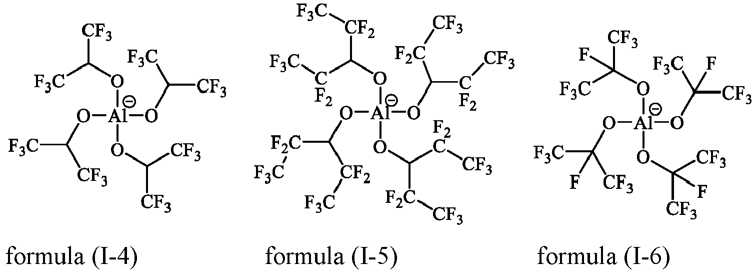

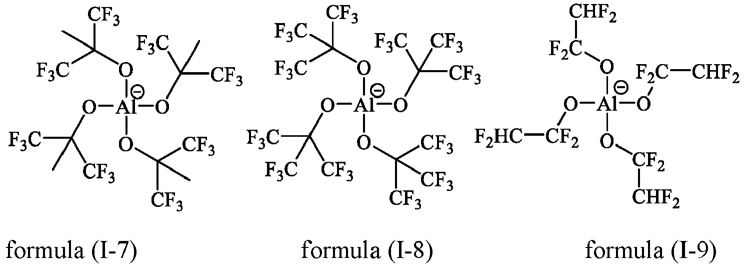

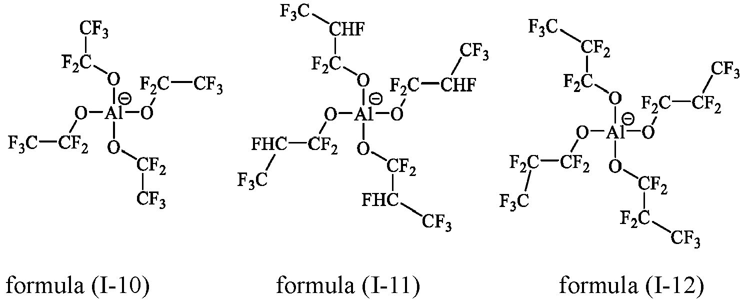

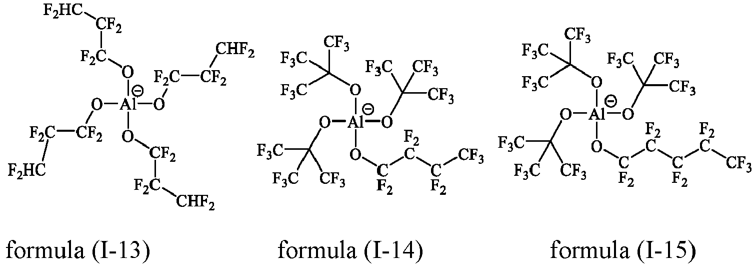

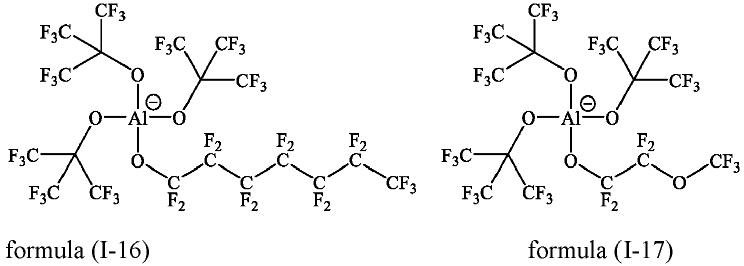

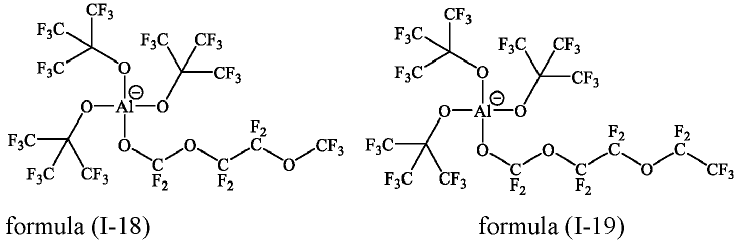

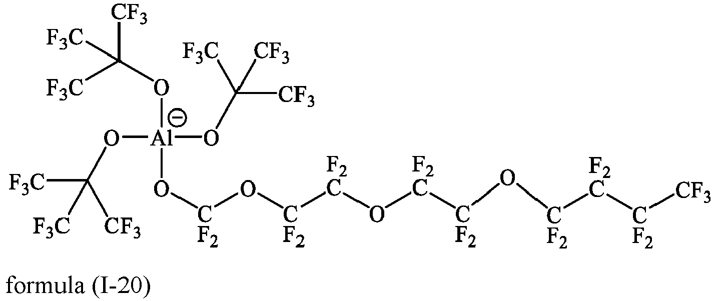

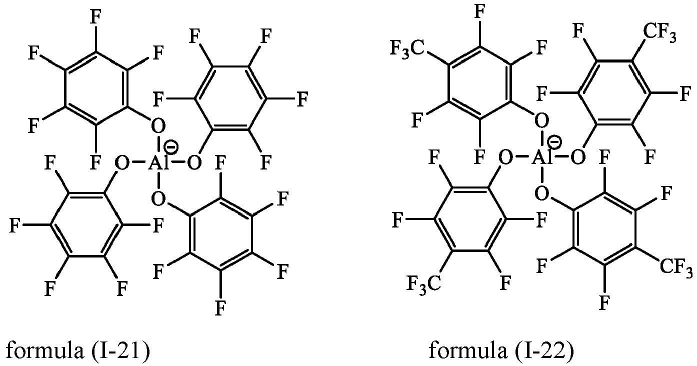

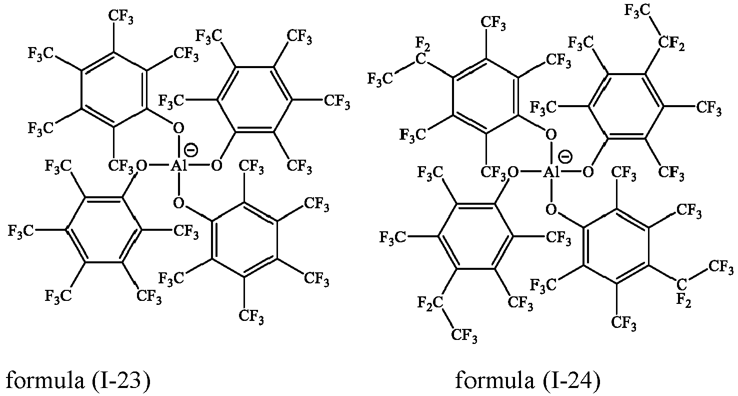

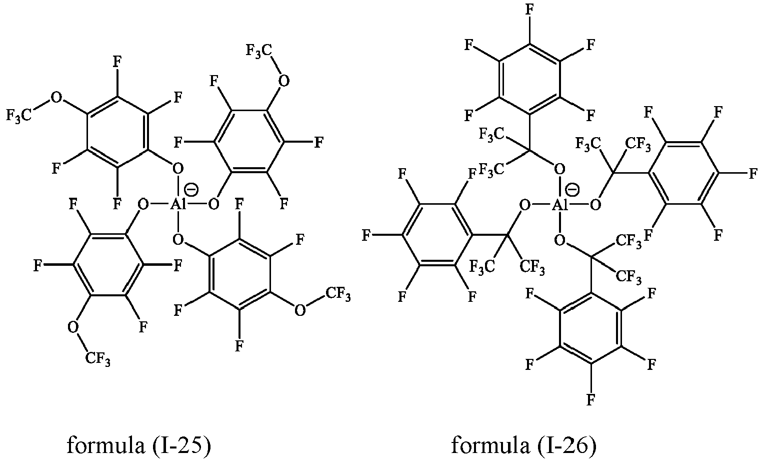

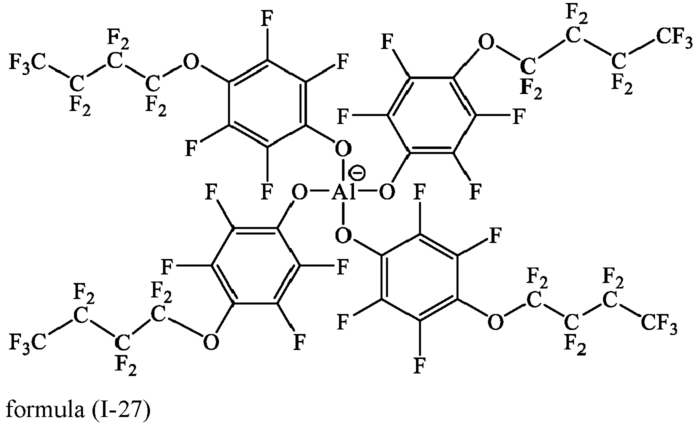

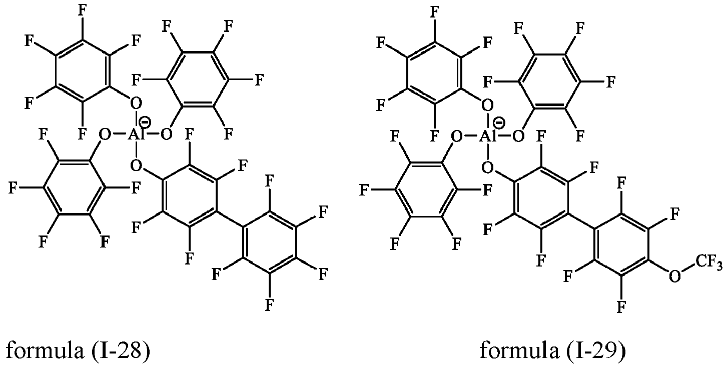

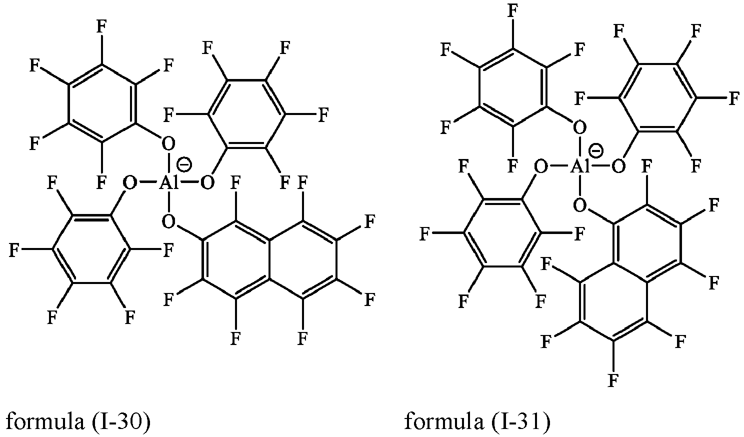

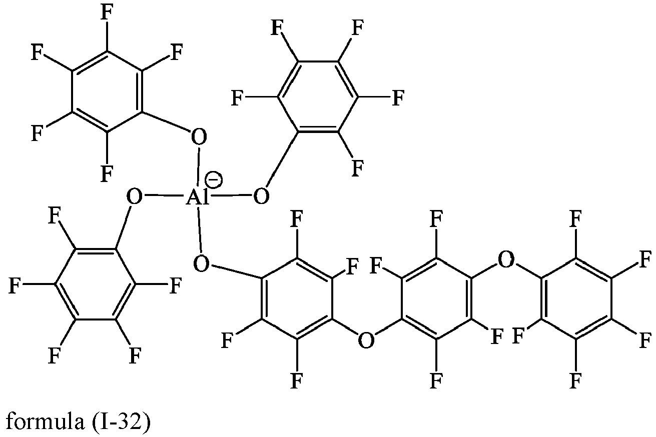

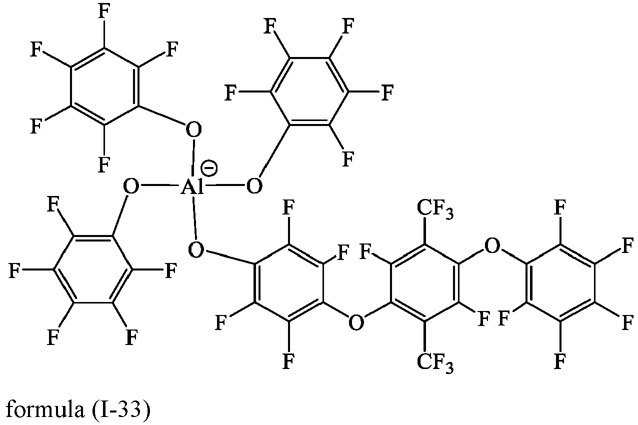

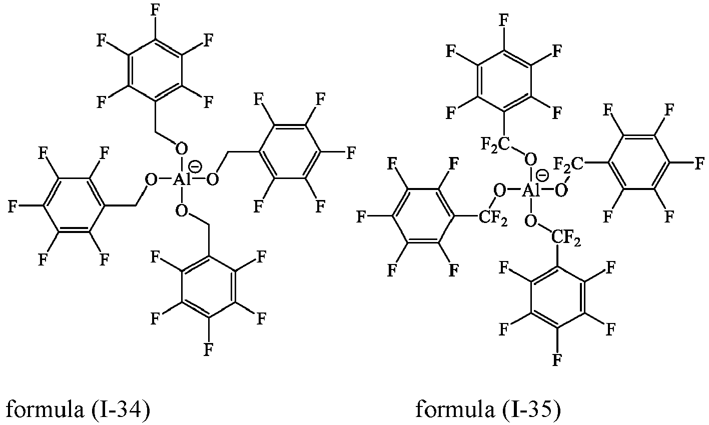

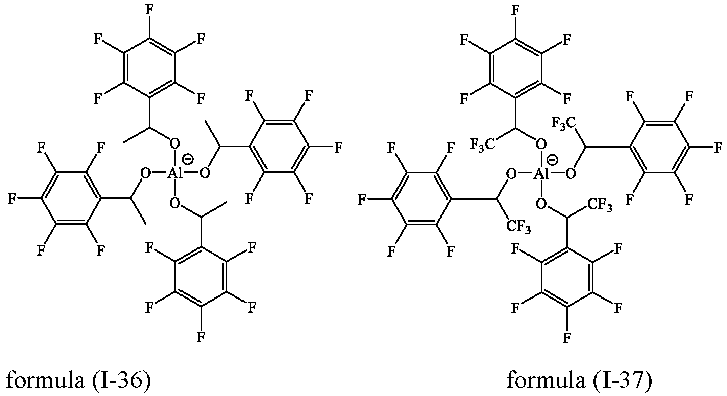

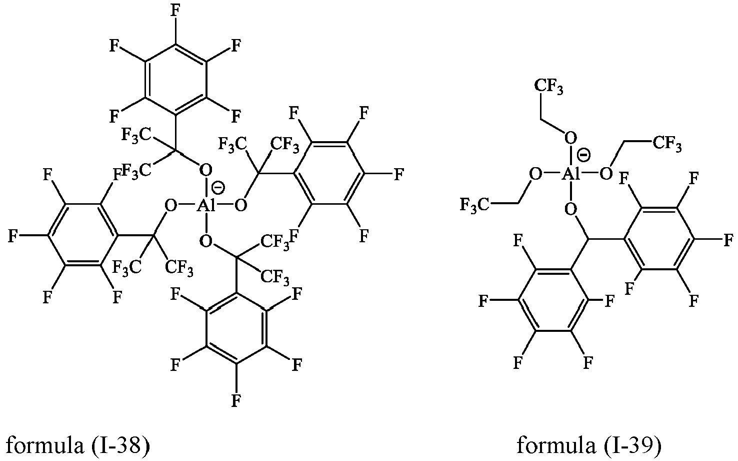

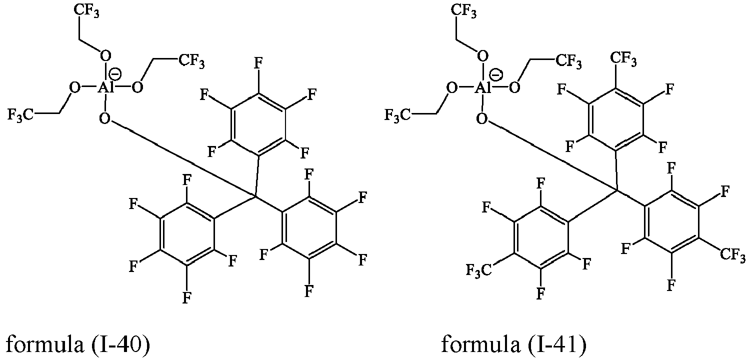

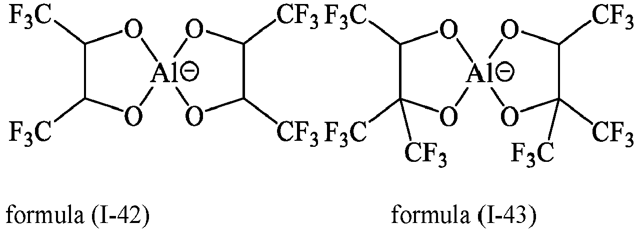

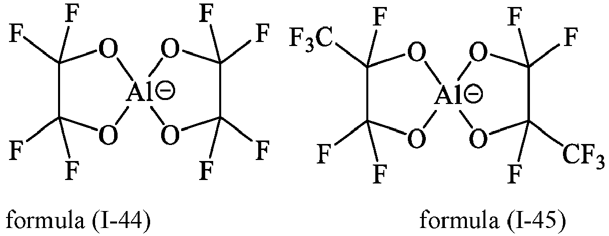

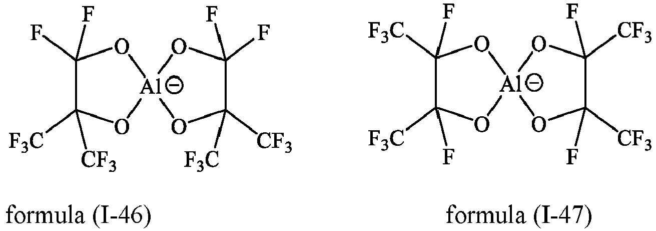

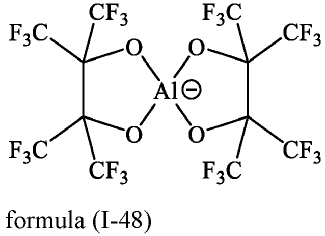

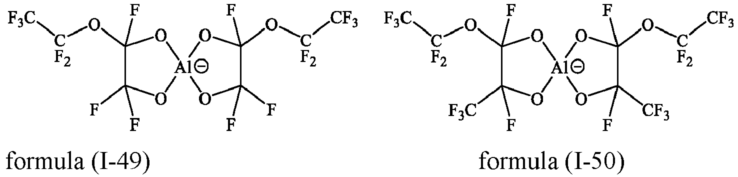

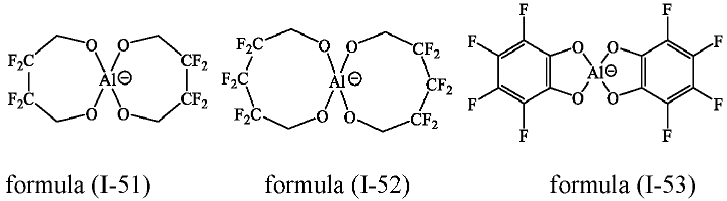

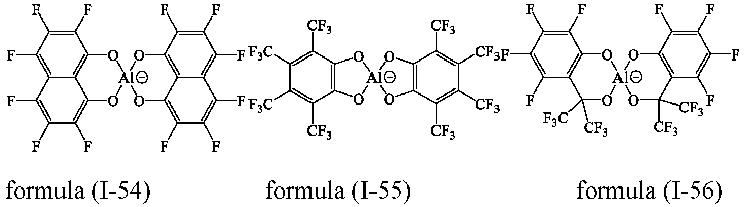

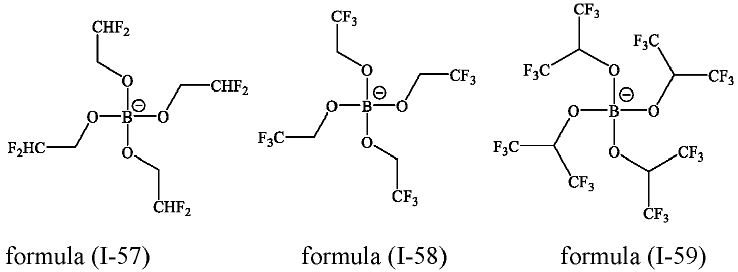

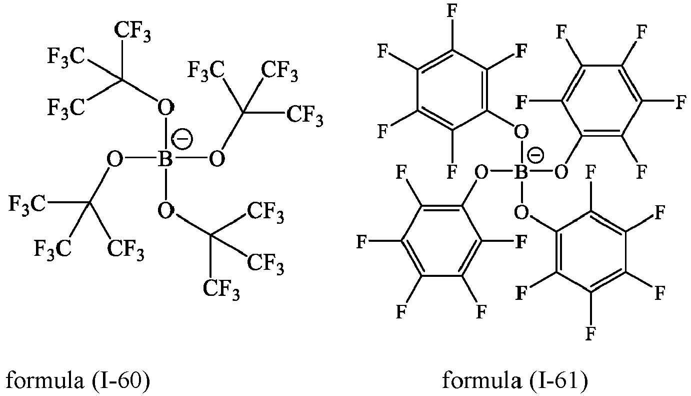

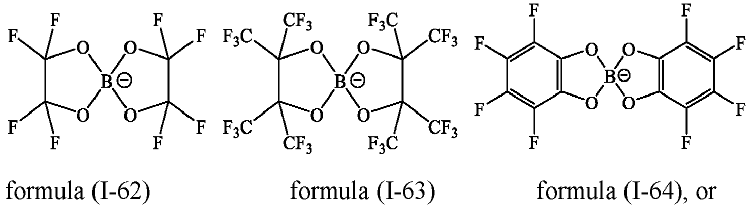

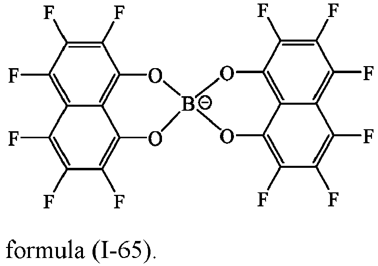

With the application of the electrolyte, including anions represented by formula (I) within the above range, to the secondary battery, the stability of the negative electrode interface and the positive electrode interface can be further enhanced, reducing the high-temperature gas production of the electrolyte and thereby improving the high-temperature cycling performance and high-temperature storage performance of the secondary battery. Moreover, due to the high ionic conductivity of the fluorine-containing compound formed by the additive A in the interface layer, the kinetic performance of the secondary battery can also be improved.

In some embodiments of this application, the electrolyte further includes a lithium salt, the lithium salt including at least one of lithium hexafluorophosphate (LiPF₆), lithium bis(fluorosulfonyl)imide (LiFSI), lithium bis(trifluoromethylsulfonyl)imide, lithium bis(oxalato)borate, lithium difluoro(oxalato)borate (LiDFOB), lithium difluorophosphate, lithium tetrafluoroborate, lithium nitrate, lithium hexafluoroantimonate, lithium hexafluoroarsenate, lithium bis(trifluoromethanesulfonyl)imide, lithium bis(pentafluoroethylsulfonyl)imide, lithium tris(trifluoromethanesulfonyl)methyl, lithium difluoro(oxalato)phosphate, or lithium tetrafluoro(oxalato)phosphate. Based on the mass of the electrolyte, a mass percentage of the lithium salt is y%, with 7.5 ≤ y ≤ 23. For example, the value of y may be 7.5, 8, 8.5, 9, 9.5, 10, 11.5, 12.5, 13, 15, 17, 19, 21, 23, or a range between any two of the above values. The electrolyte contains a lithium salt within the above range, and the percentage of the lithium salt is controlled within the above range. The lithium salt has high solubility in the electrolyte, rendering the electrolyte with high conductivity, thereby enabling the secondary battery to have good high-temperature cycling performance, high-temperature storage performance, and kinetic performance.

In some embodiments of this application, the lithium salt includes at least one of lithium hexafluorophosphate or lithium bis(fluorosulfonyl)imide. The electrolyte containing a lithium salt within the above range can render the electrolyte with higher conductivity, thereby improving the kinetic performance of the secondary battery.

In some embodiments, when the secondary battery is a sodium-ion battery, the electrolyte further includes a sodium salt. For example, the sodium salt may include but is not limited to sodium hexafluorophosphate. In some embodiments, when the secondary battery is a potassium-ion battery, the electrolyte further includes a potassium salt. For example, the potassium salt may include but is not limited to potassium hexafluorophosphate.

In some embodiments of this application, 10 ≤ x+y ≤ 75. For example, the value of x+y may be 10, 15, 20, 25, 30, 35, 37.5, 40, 45, 50, 60, 70, 75, or a range between any two of the above values. With the value of x+y controlled within the above range, the electrolyte can have good conductivity without failing to dissociate due to excessively high salt concentration, and can provide enough free-migrating ions without causing excessively high viscosity of the electrolyte and impeding ion migration in the electrolyte, thereby enabling the secondary battery to have good high-temperature cycling performance, high-temperature storage performance, and kinetic performance.

In some embodiments of this application, 0.0008 ≤ x/y ≤ 6, preferably 0.0008 ≤ x/y ≤ 4. For example, the value of x/y may be 0.0008, 0.001, 0.005, 0.01, 0.05, 0.1, 0.5, 1, 1.5, 2, 2.5, 3, 3.5, 4, 4.5, 5, 5.5, 6, or a range between any two of the above values. With the value of x/y controlled within the above range, it is conducive to enabling the secondary battery to have good high-temperature cycling performance, high-temperature storage performance, and kinetic performance.

In some embodiments of this application, the non-aqueous organic solvent includes at least one of a cyclic carbonate compound, a linear carbonate compound, a carboxylic acid cyclic lactone compound, a linear carboxylate compound, a fluorinated cyclic carbonate compound, a fluorinated linear carbonate compound, or a fluorinated linear carboxylate compound; and based on the mass of the electrolyte, a mass percentage of the non-aqueous organic solvent is 25% to 90%. In some embodiments, the non-aqueous organic solvent includes two or more of the cyclic carbonate compound, the linear carbonate compound, the carboxylic acid cyclic lactone compound, the linear carboxylate compound, the fluorinated cyclic carbonate compound, the fluorinated linear carbonate compound, or the fluorinated linear carboxylate compound. The proportion of constituents of non-aqueous organic solvent is not particularly limited in this application and can be adjusted according to actual requirements, provided that the objectives of this application can be achieved. The cyclic carbonate compound may include at least one of ethylene carbonate (EC), propylene carbonate (PC), butylene carbonate (BuC), or hexene carbonate (HeC). The fluorinated cyclic carbonate compound may include at least one of fluoroethylene carbonate (FEC), difluoroethylene carbonate (DFEC), or 3,3,3-trifluoropropylene carbonate. The linear carbonate compound may include at least one of dimethyl carbonate (DMC), diethyl carbonate (DEC), dipropyl carbonate (DPC), methyl propyl carbonate (MPC), ethyl propyl carbonate (EPC), or ethyl methyl carbonate (EMC). The fluorinated linear carbonate compound may include at least one of methyl difluoroethyl carbonate, methyl trifluoroethyl carbonate, ethyl trifluoroethyl carbonate, methyl hexafluoroisopropyl carbonate, or bis(2,2,2-trifluoroethyl) carbonate. The carboxylic acid cyclic lactone compound may include at least one of β-propiolactone, γ-butyrolactone, or δ-valerolactone. The linear carboxylate compound may be at least one of ethyl acetate, n-propyl acetate, tert-butyl acetate, methyl propionate, ethyl propionate, propyl propionate, methyl tert-butyrate, or ethyl tert-butyrate. The fluorinated linear carboxylate compound may include at least one of 2,2-difluoroethyl acetate, 2,2,2-trifluorooethyl acetate, hexafluoroisopropyl acetate, 2,2-difluoroethyl propionate, 2,2,2-trifluoroethyl propionate, or hexafluoroisopropyl propionate. The mass percentage of the non-aqueous organic solvent may be 25%, 30%, 35%, 40%, 50%, 60%, 70%, 80%, 85%, 90%, or a range between any two of the above values. The electrolyte contains the non-aqueous organic solvent within the above range, and the percentage of the non-aqueous organic solvent is controlled within the above range. This is conducive to improving the solubility of the additive A and lithium salt, rendering the electrolyte with low viscosity and high conductivity and thereby facilitating ion migration in the electrolyte. In this way, the secondary battery has stable positive electrode interface and negative electrode interface, further enabling the secondary battery to have good high-temperature cycling performance, high-temperature storage performance, and kinetic performance.

In some embodiments of the application, the non-aqueous organic solvent includes a cyclic carbonate compound and a linear carbonate compound, and a mass ratio of the cyclic carbonate compound to the linear carbonate compound is 1:9 to 9:1; and based on the mass of the electrolyte, the mass percentage of the non-aqueous organic solvent is 25% to 90%. For example, the mass ratio of the cyclic carbonate compound to the linear carbonate compound may be 1:9, 2:8, 3:7, 4:6, 5:5, 6:4, 7:3, 8:2, 9:1, or a range between any two of the above values, and the mass percentage of the non-aqueous organic solvent may be 25%, 30%, 35%, 40%, 50%, 60%, 70%, 80%, 85%, 90%, or a range between any two of the above values. With the mass ratio of the cyclic carbonate compound to the linear carbonate compound controlled within the above range, it is conducive to improving the solubility of the additive A and lithium salt, rendering the electrolyte with low viscosity and high conductivity and thereby facilitating ion migration in the electrolyte. In this way, the secondary battery has stable positive electrode interface and negative electrode interface, further enabling the secondary battery to have good high-temperature cycling performance, high-temperature storage performance, and kinetic performance.

In some embodiments of the application, the non-aqueous organic solvent includes a cyclic carbonate compound and a linear carboxylate compound, and the mass ratio of the cyclic carbonate compound to the linear carboxylate compound is 1:9 to 9:1; and based on the mass of the electrolyte, the mass percentage of the non-aqueous organic solvent is 25% to 90%. For example, the mass ratio of the cyclic carbonate compound to the linear carboxylate compound may be 1:9, 2:8, 3:7, 4:6, 5:5, 6:4, 7:3, 8:2, 9: 1, or a range between any two of the above values, and the mass percentage of the non-aqueous organic solvent may be 25%, 30%, 35%, 40%, 50%, 60%, 70%, 80%, 85%, 90%, or a range between any two of the above values. With the mass ratio of the cyclic carbonate compound to the linear carboxylate compound controlled within the above range, it is conducive to improving the solubility of the additive A and lithium salt, rendering the electrolyte with low viscosity and high conductivity and thereby facilitating ion migration in the electrolyte. In this way, the secondary battery has stable positive electrode interface and negative electrode interface, further enabling the secondary battery to have good high-temperature cycling performance, high-temperature storage performance, and kinetic performance.

A second aspect of this application provides a secondary battery, including a positive electrode plate, a negative electrode plate, and the electrolyte according to the first aspect of this application. The secondary battery according to the second aspect of this application has good high-temperature cycling performance, high-temperature storage performance, and kinetic performance.

In some embodiments of this application, the negative electrode plate includes a negative electrode current collector and a negative electrode active material layer disposed on at least one surface of the negative electrode current collector, the negative electrode active material layer includes a negative electrode active material, and the negative electrode active material includes a silicon-based material. With the selection of the negative electrode active material within the above range, the silicon-based material has a high specific capacity. This is conducive to enabling the secondary battery to have good high-temperature cycling performance, high-temperature storage performance, and kinetic performance while also possessing a high energy density.

The silicon-based material is not particularly limited in this application, provided that the objectives of this application can be achieved. For example, silicon-based materials may include but are not limited to silicon nanoparticles, silicon nanowires, micro-silicon, silicon oxide materials (SiO_{w}, 0 < w ≤ 2), silicon carbon composites (SiC), or silicon-based alloy materials, with a coating layer of LiF, AlF₃, Li₂CO₃, amorphous carbon, graphitized carbon, or an organic polymer. The silicon-based alloy materials may include but are not limited to silicon-tin alloys, silicon-magnesium alloys, silicon-aluminum alloys, silicon-iron alloys, or the like. The negative electrode active material in the application may further include at least one of natural graphite, artificial graphite, a mesocarbon microbead (MCMB), hard carbon, soft carbon, Li-Sn alloys, Li-Sn-O alloys, Sn, SnO, SnO₂, spinel-structure lithium titanate Li₄Ti₅O₁₂, Li-Al alloys, lithium metal, or the like.

Thicknesses of the negative electrode current collector and the negative electrode active material layer are not particularly limited in this application, provided that the objectives of this application can be achieved. For example, thickness of the negative electrode current collector is 4 µm to 12 µm, and thickness of a single-sided negative electrode active material layer is 30 µm to 130 µm. In this application, the negative electrode active material layer may be disposed on one or two surfaces of the negative electrode current collector in a thickness direction of the negative electrode current collector. It should be noted that the "surface" herein may be an entire region of the negative electrode current collector, or may be a partial region of the negative electrode current collector. This is not particularly limited in this application, provided that the objectives of this application can be achieved. The negative electrode active material layer of this application may further include a conductive agent and a binder. Optionally, the negative electrode plate of this application may further include a conductive layer. The conductive layer may be disposed between the negative electrode current collector and the negative electrode active material layer, and the conductive layer may be disposed on one surface or two surfaces of the negative electrode current collector in the thickness direction of the negative electrode current collector. Composition of the conductive layer is not particularly limited in this application and may include a conductive agent and a binder.

The positive electrode plate is not particularly limited in this application, provided that the objectives of this application can be achieved. For example, the positive electrode plate includes a positive electrode current collector and a positive electrode active material layer disposed on at least one surface of the positive electrode current collector. The positive electrode current collector is not particularly limited in this application, provided that the objectives of this application can be achieved. For example, the positive electrode current collector may include aluminum foil, aluminum alloy foil, or the like. The positive electrode active material layer in this application includes a positive electrode active material. A type of the positive electrode active material is not particularly limited in this application, provided that the objectives of this application can be achieved. For example, in some embodiments, the secondary battery is a lithium-ion battery, and the positive electrode active material may include at least one of lithium nickel cobalt manganate (NCM811, NCM622, NCM523, NCM111), lithium nickel cobalt aluminate, lithium iron phosphate, lithium-rich manganese-based materials, lithium cobalt oxide (LiCoO₂), lithium manganate, lithium iron manganese phosphate, lithium titanate, or the like. In some other embodiments, the secondary battery is a sodium-ion battery, and the positive electrode active material may include Na[Ni_{1/3}Fe_{1/3}Mn_{1/3}]O₂. When the secondary battery is a potassium-ion battery, the positive electrode active material may include KₘMnFe(CN)₆, with 0 ≤ m ≤ 2, for example, K_{1.89}MnFe(CN)₆. In this application, the positive electrode active material may further include a non-metal element. For example, the non-metal element includes at least one of fluorine, phosphorus, boron, chlorine, silicon, sulfur, or the like. These elements can further improve stability of the positive electrode active material. In this application, thicknesses of the positive electrode current collector and the positive electrode active material layer are not particularly limited, provided that the objectives of this application can be achieved. For example, the thickness of the positive electrode current collector is 5 µm to 20 µm, and preferably 6 µm to 18 µm. A thickness of a one-sided positive electrode active material layer is 30 µm to 120 µm. In this application, the positive electrode active material layer may be disposed on one surface of the positive electrode current collector in a thickness direction, or may be disposed on two surfaces of the positive electrode current collector. It should be noted that the "surface" herein may be an entire region or a partial region of the positive electrode current collector. This is not particularly limited in this application, provided that the objectives of this application can be achieved. The positive electrode active material layer of this application may further include a conductive agent and a binder. Optionally, the positive electrode plate may further include a conductive layer. The conductive layer is sandwiched between the positive electrode current collector and the positive electrode active material layer.

The conductive agent and the binder are not particularly limited, provided that the objectives of this application can be achieved. For example, the conductive agent may include at least one of conductive carbon black (Super P), carbon nanotubes (CNTs), carbon nanofibers, flake graphite, carbon dots, graphene, or the like. The binder may include at least one of polyacrylic alcohol, sodium polyacrylate, potassium polyacrylate, lithium polyacrylate, polyimide, polyamideimide, styrene butadiene rubber (SBR), polyvinyl alcohol (PVA), polyvinylidene fluoride (PVDF), polytetrafluoroethylene (PTFE), polyvinyl butyral (PVB), water-based acrylic resin, carboxymethyl cellulose (CMC), sodium carboxymethyl cellulose (CMC-Na), or the like.

The secondary battery of this application further includes a separator, and the separator is not particularly limited in this application, provided that the objectives of this application can be achieved. For example, the separator may include a substrate layer and a surface treatment layer. The substrate layer may be a non-woven fabric, film, or composite film of a porous structure. The substrate layer may be made of at least one of polyethylene, polypropylene, polyethylene terephthalate, polyimide, or the like. Optionally, a polypropylene porous film, a polyethylene porous film, a polypropylene nonwoven fabric, a polyethylene nonwoven fabric or a polypropylene-polyethylene-polypropylene porous composite film can be used. Optionally, the surface treatment layer is provided on at least one surface of the substrate layer, and the surface treatment layer may be a polymer layer or an inorganic substance layer, or a layer formed by mixing a polymer and an inorganic substance. For example, the inorganic layer includes inorganic particles and a binder. The inorganic particles are not particularly limited, and may be selected from, for example, at least one of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is not particularly limited, and for example, may be at least one selected from polyvinylidene fluoride, polyvinylidene fluoride-hexafluoropropylene, polytetrafluoroethylene, polyhexafluoropropylene, polyamide, polyacrylonitrile, polyacrylate, polyacrylic acid, sodium polyacrylate, potassium polyacrylate, lithium polyacrylate, polyvinylpyrrolidone, polyvinylether, or polymethylmethacrylate. The polymer layer includes a polymer, and a material of the polymer includes at least one of polyamide, polyacrylonitrile, acrylate polymer, polyacrylic acid, sodium polyacrylate, potassium polyacrylate, lithium polyacrylate, polyvinylpyrrolidone, polyvinylether, polyvinylidene fluoride, polyvinylidene fluoride-hexafluoropropylene, or the like. Thickness of the separator is not particularly limited in this application, provided that the objectives of this application can be achieved. For example, the thickness of the separator may be 5 µm to 500 µm.

The secondary battery of this application is not particularly limited and may include any apparatus in which electrochemical reactions take place. In an embodiment of this application, the secondary battery may include but is not limited to a lithium-ion secondary battery (lithium-ion battery), a lithium metal secondary battery, a sodium-ion secondary batteries (sodium-ion battery), a sodium metal secondary battery, a potassium-ion secondary battery (potassium-ion battery), a potassium metal secondary battery, a magnesium-ion secondary battery (magnesium-ion battery), a magnesium metal secondary battery, a calcium-ion secondary batteries (calcium-ion battery), a calcium metal secondary battery, a zinc-ion secondary batteries (zinc-ion battery), a zinc metal secondary battery, a lithium polymer secondary battery, a lithium-ion polymer secondary battery, or the like.

A process for preparation of secondary battery is well known to persons skilled in the art, and is not particularly limited in this application. For example, the process may include but is not limited to the following steps: a positive electrode plate, a separator, and a negative electrode plate are stacked in sequence and undergo operations such as winding and folding as needed to obtain an electrode assembly with a wound structure, the electrode assembly is put into a packaging bag, and the packaging bag is injected with an electrolyte and sealed to obtain a secondary battery; or a positive electrode plate, a separator, and a negative electrode plate are stacked in sequence, four corners of an entire laminated structure are fixed with tapes to obtain an electrode assembly with a laminated structure, the electrode assembly is put into a packaging bag, and the packaging bag is injected with an electrolyte and sealed to obtain a secondary battery. In addition, an overcurrent protection element, a guide plate, and the like may be placed as required in the packaging bag to prevent pressure increase, overcharge, and overdischarge in the secondary battery. The packaging bag is not particularly limited in this application, and persons skilled in the art can make selection according to actual requirements, provided that the objectives of this application can be achieved. For example, aluminum-plastic film packaging bags can be used.

A third aspect of the application provides an electronic apparatus including the secondary battery according to the second aspect of this application. The secondary battery according to the second aspect of this application has good high-temperature storage performance, high-temperature cycling performance, and kinetic performance. Therefore, the electronic apparatus of this application has a relatively long service life.

The electronic apparatus of this application is not particularly limited and may be any known electronic apparatus used in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a lighting appliance, a toy, a game console, a clock, an electric tool, a flash lamp, a camera, a large household battery, or a lithium-ion capacitor.

This application provides an electrolyte for secondary batteries, a secondary battery, and an electronic apparatus. The electrolyte includes a non-aqueous organic solvent and an additive A, where the additive A includes a salt composed of anions and cations represented by formula (I); Mi is selected from group IIIA elements, and cations include any one of Li⁺, Na⁺, K⁺, Mg²⁺, Ca²⁺, and Zn²⁺; and based on a mass of the electrolyte, a mass percentage of the additive A is x%, with 0.01 ≤ x ≤ 60. The electrolyte includes the additive A, and the mass percentage of the additive A is controlled within the range defined in this application. The additive A has a relatively high reduction potential and is preferentially reduced in the first charging process of a secondary battery to obtain a group IIIA element. The group IIIA element can form an alloy phase with low activity with a negative electrode active material, thus enhancing the stability of the negative electrode interface. In addition, anions in the additive A, under the action of electric field force, migrate to the positive electrode interface and are oxidatively decomposed into an inert fluorine-containing compound, forming an interface layer. This is conducive to enhancing the stability of the positive electrode interface, reducing the high-temperature gas production of the electrolyte and thereby improving the high-temperature cycling performance and high-temperature storage performance of the secondary battery. Moreover, due to the high ionic conductivity of the fluorine-containing compound formed by the additive A in the interface layer, the kinetic performance of the secondary batteries can also be improved.

Certainly, when any one of the products or methods of this application is implemented, all advantages described above are not necessarily demonstrated simultaneously.

### DETAILED DESCRIPTION

The following clearly and completely describes the technical solutions in some examples of this application. Apparently, the described examples are only some rather than all of the examples of this application. Based on the examples of this application, all other examples obtained by persons of ordinary skill in the art based on this application shall fall within the protection scope of this application.

It should be noted that in specific embodiments of this application, a lithium-ion battery, a sodium-ion battery, and the like are used as examples of the secondary battery to illustrate this application. However, the secondary battery of this application is not limited to the lithium-ion battery, the sodium-ion battery, and the like.

### Examples

The following describes some embodiments of this application more specifically by using examples and comparative examples. Various tests and evaluations are performed in the following methods. In addition, unless otherwise specified, "part" and "%" are measured by mass.

### Test method and device

### Cycling performance test

A secondary battery (including lithium-ion battery, sodium-ion battery, potassium-ion battery, or the like) was put into a constant temperature test chamber set at 45°C and left standing for 30 minutes to reach a constant temperature. The secondary battery was charged at a constant current of 0.5C to 4.5 V, charged at a constant voltage to a current of 0.025C, left standing for 5 minutes, and then discharged at a constant current of 0.5C to 3.0 V. An initial discharge capacity was recorded as C₀. The steps were repeated for 100 cycles, the discharge capacity of C₁ after 100 cycles was recorded, and the cycling capacity retention rate of the secondary battery was calculated. Cycling capacity retention rate = C₁/C₀ × 100%.

### High-temperature storage performance test

The secondary battery was put into a constant temperature environment of 25°C and left standing for 30 minutes, so that the secondary battery reached a constant temperature. The secondary battery was charged to 4.5 V at a constant current of 0.5C, and then charged at a constant voltage to a current of 0.025C. A thickness of the secondary battery was recorded as an initial thickness. The secondary battery was put into a 60°C thermostat and stored there for 30 days. During this period, the lithium-ion battery was taken out every 6 days, and the thickness of the secondary battery was tested and recorded once. A tested thickness after 30 days was recorded as the storage thickness. A thickness swelling rate of the secondary battery was calculated and used as an indicator for evaluating the high-temperature storage performance of the secondary battery. High-temperature storage swelling rate = (storage thickness - initial thickness)/initial thickness × 100%.

### Rate discharge test

The secondary battery was put into a 25°C thermostat, left standing for 120 minutes, charged to 4.5 V at a constant current of 0.5C, then charged at a constant voltage to 0.025C, left standing for 5 minutes, discharged to 3 V at 0.2C, with a discharge capacity of C₂ at 0.5C recorded, and left standing for 5 minutes. The secondary battery was charged to 4.5 V at a constant current of 0.5C, then charged at a constant voltage to 0.025C, left standing for 5 minutes, and discharged to 3 V at 2C. A discharge capacity of C₃ at 2C was recorded. Discharge capacity retention rate at 2C = C3/C2 × 100%.

### Example 1-1

### <Preparation of electrolyte>

In an argon glove box with water content less than < 10 ppm, non-aqueous organic solvents ethylene carbonate (EC) and diethyl carbonate (DEC) were mixed at a mass ratio of 3:7, then lithium salt LiPF₆ was added to the non-aqueous organic solvents, dissolved and mixed well. Then additive A was added into a resulting mixture and stirred evenly to obtain an electrolyte. Based on a mass of the electrolyte, a mass percentage of lithium salt LiPF₆ was 12.5%, a mass percentage of additive A was 0.5%, and the remainder was the base solvent. Anions represented by formula (I) in the additive A is denoted as formula (I-1), with the cation being Li⁺.

### <Preparation of positive electrode plate>

Positive electrode active material lithium cobaltate (LiCoO₂), conductive agent acetylene black (Super P), and binder (PVDF) were mixed at a mass ratio of 97:1.4:1.6, added with N-methylpyrrolidone (NMP) as the solvent, and prepared into a slurry with a solid content of 75 wt%, and the slurry was stirred under an action of a vacuum mixer to obtain a uniform positive electrode slurry. The positive electrode slurry was uniformly applied onto a surface of a positive electrode current collector aluminum foil with a thickness of 10 µm and dried at 85°C to obtain a positive electrode plate having a positive electrode active material coated on one surface, with a positive electrode active material coating layer of 110 µm in thickness. Then, the foregoing steps were repeated on another surface of the positive electrode current collector aluminum foil to obtain a positive electrode plate coated with the positive electrode active material on two surfaces. After coating was completed, the positive electrode plate was cold pressed and cut into a size of 74 mm × 867 mm for later use.

### <Preparation of negative electrode plate>

Negative electrode active material artificial graphite, silicon-carbon composite (SiC), conductive agent Super P, thickener sodium carboxymethyl cellulose (CMC), binder styrene-butadiene rubber (SBR), and lithium polyacrylate (PAALi) were mixed at a mass ratio of 67:25:1.5:0.5:1:5, and then added with deionized water as the solvent, and prepared into a negative electrode slurry with a solid content of 54 wt%, and the negative electrode slurry was stirred under an action of a vacuum mixer to obtain a uniform negative electrode slurry. Conductive agent Super P and binder SBR were mixed at a mass ratio of 9:1, and then added with deionized water as the solvent to prepare into a conductive layer slurry with a solid content of 10 wt%. The conductive layer slurry and the negative electrode slurry were uniformly applied onto a surface of a negative electrode current collector copper foil of 8 µm in thickness in sequence and dried at 85°C to obtain a single-side coated negative electrode plate with a conductive layer of 2 µm in thickness and a negative electrode active material layer of 100 µm in thickness. Then, the foregoing steps were repeated on another surface of the negative electrode current collector copper foil to obtain a double-side coated negative electrode plate. After coating was completed, the negative electrode plate was cold pressed and cut into a size of 76 mm × 851 mm for later use.

### <Preparation of separator>

A polyethylene (PE) porous film (provided by Celgard) with a thickness of 5 µm was used.

### <Preparation of secondary battery>

The prepared positive electrode plate, separator, and negative electrode plate were sequentially stacked so that the separator was sandwiched between the positive electrode plate and the negative electrode plate to provide separation. Then winding was performed to obtain an electrode assembly. After tabs were welded, the electrode assembly was put into an aluminum-plastic film package. The package was placed in a vacuum oven at 85°C for drying for 12 hours to remove moisture. The prepared electrolyte was injected, followed by processes such as vacuum packaging, standing, formation (charged to 3.5 V at a constant current of 0.02C, and then charged to 3.9 V at a constant current of 0.1C), shaping, and capacity testing, to obtain a lithium-ion battery, that is, a secondary battery.

### Example 1-2 to Example 1-75

These examples were the same as Example 1-1 except that in <Preparation of electrolyte>, the type and mass percentage of anions represented by formula (I) in the additive A were adjusted, the mass percentage of the non-aqueous organic solvent was changed accordingly, and the mass percentage of the lithium salt remained unchanged, according to Table 1.

### Example 1-76

The example was the same as Example 1-72 except that in <Preparation of electrolyte>, the type of cations in the additive A was adjusted, and the lithium salt LiPF₆ was replaced by sodium salt NaPF₆, according to Table 1; and that in <Preparation of positive electrode plate>, LiCoO₂ was replaced by positive electrode active material Na[Ni_{1/3}Fe_{1/3}Mn_{1/3}]O₂; and that in <Preparation of secondary battery>, the sodium-ion battery was prepared.

### Example 1-77

The example was the same as Example 1-72 except that in <Preparation of electrolyte>, according to Table 1, the type of cations in the additive A was adjusted, the lithium salt LiPF₆ was replaced by potassium salt KPF₆, and that in <Preparation of positive electrode plate>, LiCoO₂ was replaced by positive electrode active material K_{1.89}MnFe(CN)₆, and that in <Preparation of secondary battery>, the potassium-ion battery was prepared.

### Example 1-78

The example was the same as Example 1-72 except that in <Preparation of electrolyte>, the type of cations in the additive A was adjusted according to Table 1.

### Example 1-79

The example was the same as Example 1-72 except that in <Preparation of electrolyte>, the type of cations in the additive A was adjusted according to Table 1.

### Example 1-80

The example was the same as Example 1-72 except that in <Preparation of electrolyte>, the type of cations in the additive A was adjusted according to Table 1.

### Example 2-1 to Example 2-15

These examples were the same as Example 1-75 except that in <Preparation of electrolyte>, the mass percentage of the additive A and the type and mass percentage of the lithium salt were adjusted, and the mass percentage of the non-aqueous organic solvent was changed accordingly, according to Table 2.

### Example 3-1 to Example 3-20

These examples were the same as Example 1-75 except that in <Preparation of electrolyte>, the type of the non-aqueous organic solvent and the mass ratio of constituents in the non-aqueous organic solvent were adjusted, and the mass percentages of the additive A and the lithium salt remained unchanged, according to Table 3.

### Comparative example 1-1

The comparative example was the same as Example 1-1 except that in <Preparation of electrolyte>, additive A was not added, the mass percentage of the non-aqueous organic solvent was changed accordingly, and the mass percentage of the lithium salt remained unchanged.

### Comparative examples 1-2 and 1-3

These comparative examples were the same as Example 1-73 except that in <Preparation of electrolyte>, the type and mass percentage of anions represented by formula (I) in the additive A were adjusted, the mass percentage of the non-aqueous organic solvent was changed accordingly, and the mass percentage of the lithium salt remained unchanged, according to Table 1.

### Comparative example 2-1

The comparative example was the same as Example 1-75 except that in <Preparation of electrolyte>, the mass percentages of the additive A and the lithium salt were adjusted, and the mass percentage of the non-aqueous organic solvent was changed accordingly, according to Table 2.

Preparation parameters and performance parameters of examples and comparative examples are shown in Table 1 to Table 3.

**Table 1**

| | x | Type of anions represented by formula (I) in additive A | Type of cations in additive A | x+y | x/y | Percentage of non-aqueous organic solvent (%) | Cycling capacity retention rate (%) | High-temperature storage swelling rate (%) |
|---|---|---|---|---|---|---|---|---|
| Example 1-1 | 0.5 | formula (I-1) | Li⁺ | 13 | 0.04 | 87 | 72 | 51 |
| Example 1-2 | 0.5 | formula (I-2) | Li⁺ | 13 | 0.04 | 87 | 75 | 51 |
| Example 1-3 | 0.5 | formula (I-3) | Li⁺ | 13 | 0.04 | 87 | 74 | 49 |
| Example 1-4 | 0.5 | formula (I-4) | Li⁺ | 13 | 0.04 | 87 | 79 | 45 |
| Example 1-5 | 0.5 | formula (I-5) | Li⁺ | 13 | 0.04 | 87 | 76 | 45 |
| Example 1-6 | 0.5 | formula (I-6) | Li⁺ | 13 | 0.04 | 87 | 77 | 50 |
| Example 1-7 | 0.5 | formula (I-7) | Li⁺ | 13 | 0.04 | 87 | 79 | 47 |
| Example 1-8 | 0.5 | formula (I-8) | Li⁺ | 13 | 0.04 | 87 | 72 | 52 |
| Example 1-9 | 0.5 | formula (I-9) | Li⁺ | 13 | 0.04 | 87 | 74 | 43 |
| Example 1-10 | 0.5 | formula (I-10) | Li⁺ | 13 | 0.04 | 87 | 78 | 45 |
| Example 1-11 | 0.5 | formula (I-11) | Li⁺ | 13 | 0.04 | 87 | 77 | 50 |
| Example 1-12 | 0.5 | formula (I-12) | Li⁺ | 13 | 0.04 | 87 | 73 | 51 |
| Example 1-13 | 0.5 | formula (I-13) | Li⁺ | 13 | 0.04 | 87 | 79 | 50 |
| Example 1-14 | 0.5 | formula (I-14) | Li⁺ | 13 | 0.04 | 87 | 75 | 43 |
| Example 1-15 | 0.5 | formula (I-15) | Li⁺ | 13 | 0.04 | 87 | 74 | 48 |
| Example 1-16 | 0.5 | formula (I-16) | Li⁺ | 13 | 0.04 | 87 | 77 | 47 |
| Example 1-17 | 0.5 | formula (I-17) | Li⁺ | 13 | 0.04 | 87 | 75 | 44 |
| Example 1-18 | 0.5 | formula (I-18) | Li⁺ | 13 | 0.04 | 87 | 78 | 47 |
| Example 1-19 | 0.5 | formula (I-19) | Li⁺ | 13 | 0.04 | 87 | 74 | 47 |
| Example 1-20 | 0.5 | formula (I-20) | Li⁺ | 13 | 0.04 | 87 | 79 | 47 |
| Example 1-21 | 0.5 | formula (I-21) | Li⁺ | 13 | 0.04 | 87 | 81 | 41 |
| Example 1-22 | 0.5 | formula (I-22) | Li⁺ | 13 | 0.04 | 87 | 74 | 51 |
| Example 1-23 | 0.5 | formula (I-23) | Li⁺ | 13 | 0.04 | 87 | 80 | 50 |
| Example 1-24 | 0.5 | formula (I-24) | Li⁺ | 13 | 0.04 | 87 | 76 | 52 |
| Example 1-25 | 0.5 | formula (I-25) | Li⁺ | 13 | 0.04 | 87 | 76 | 52 |
| Example 1-26 | 0.5 | formula (I-26) | Li⁺ | 13 | 0.04 | 87 | 78 | 45 |
| Example 1-27 | 0.5 | formula (I-27) | Li⁺ | 13 | 0.04 | 87 | 80 | 44 |
| Example 1-28 | 0.5 | formula (I-28) | Li⁺ | 13 | 0.04 | 87 | 75 | 47 |
| Example 1-29 | 0.5 | formula (I-29) | Li⁺ | 13 | 0.04 | 87 | 77 | 46 |
| Example 1-30 | 0.5 | formula (I-30) | Li⁺ | 13 | 0.04 | 87 | 72 | 49 |
| Example 1-31 | 0.5 | formula (I-31) | Li⁺ | 13 | 0.04 | 87 | 79 | 43 |
| Example 1-32 | 0.5 | formula (I-32) | Li⁺ | 13 | 0.04 | 87 | 77 | 50 |
| Example 1-33 | 0.5 | formula (I-33) | Li⁺ | 13 | 0.04 | 87 | 80 | 51 |
| Example 1-34 | 0.5 | formula (I-34) | Li⁺ | 13 | 0.04 | 87 | 75 | 46 |
| Example 1-35 | 0.5 | formula (I-35) | Li⁺ | 13 | 0.04 | 87 | 78 | 48 |
| Example 1-36 | 0.5 | formula (I-36) | Li⁺ | 13 | 0.04 | 87 | 80 | 47 |
| Example 1-37 | 0.5 | formula (I-37) | Li⁺ | 13 | 0.04 | 87 | 73 | 46 |
| Example 1-38 | 0.5 | formula (I-38) | Li⁺ | 13 | 0.04 | 87 | 78 | 43 |
| Example 1-39 | 0.5 | formula (I-39) | Li⁺ | 13 | 0.04 | 87 | 79 | 41 |
| Example 1-40 | 0.5 | formula (I-40) | Li⁺ | 13 | 0.04 | 87 | 79 | 42 |
| Example 1-41 | 0.5 | formula (I-41) | Li⁺ | 13 | 0.04 | 87 | 73 | 50 |
| Example 1-42 | 0.5 | formula (I-42) | Li⁺ | 13 | 0.04 | 87 | 79 | 44 |
| Example 1-43 | 0.5 | formula (I-43) | Li⁺ | 13 | 0.04 | 87 | 76 | 43 |
| Example 1-44 | 0.5 | formula (I-44) | Li⁺ | 13 | 0.04 | 87 | 73 | 51 |
| Example 1-45 | 0.5 | formula (I-45) | Li⁺ | 13 | 0.04 | 87 | 74 | 42 |
| Example 1-46 | 0.5 | formula (I-46) | Li⁺ | 13 | 0.04 | 87 | 76 | 44 |
| Example 1-47 | 0.5 | formula (I-47) | Li⁺ | 13 | 0.04 | 87 | 75 | 48 |
| Example 1-48 | 0.5 | formula (I-48) | Li⁺ | 13 | 0.04 | 87 | 78 | 41 |
| Example 1-49 | 0.5 | formula (I-49) | Li⁺ | 13 | 0.04 | 87 | 74 | 52 |
| Example 1-50 | 0.5 | formula (I-50) | Li⁺ | 13 | 0.04 | 87 | 79 | 49 |
| Example 1-51 | 0.5 | formula (I-51) | Li⁺ | 13 | 0.04 | 87 | 78 | 49 |
| Example 1-52 | 0.5 | formula (I-52) | Li⁺ | 13 | 0.04 | 87 | 76 | 41 |
| Example 1-53 | 0.5 | formula (I-53) | Li⁺ | 13 | 0.04 | 87 | 78 | 46 |
| Example 1-54 | 0.5 | formula (I-54) | Li⁺ | 13 | 0.04 | 87 | 77 | 42 |
| Example 1-55 | 0.5 | formula (I-55) | Li⁺ | 13 | 0.04 | 87 | 75 | 45 |
| Example 1-56 | 0.5 | formula (I-56) | Li⁺ | 13 | 0.04 | 87 | 78 | 42 |
| Example 1-57 | 0.5 | formula (I-57) | Li⁺ | 13 | 0.04 | 87 | 73 | 41 |
| Example 1-58 | 0.5 | formula (I-58) | Li⁺ | 13 | 0.04 | 87 | 72 | 44 |
| Example 1-59 | 0.5 | formula (I-59) | Li⁺ | 13 | 0.04 | 87 | 76 | 51 |
| Example 1-60 | 0.5 | formula (I-60) | Li⁺ | 13 | 0.04 | 87 | 77 | 43 |
| Example 1-61 | 0.5 | formula (I-61) | Li⁺ | 13 | 0.04 | 87 | 72 | 44 |
| Example 1-62 | 0.5 | formula (I-62) | Li⁺ | 13 | 0.04 | 87 | 75 | 51 |
| Example 1-63 | 0.5 | formula (I-63) | Li⁺ | 13 | 0.04 | 87 | 75 | 41 |
| Example 1-64 | 0.5 | formula (I-64) | Li⁺ | 13 | 0.04 | 87 | 75 | 41 |
| Example 1-65 | 0.5 | formula (I-65) | Li⁺ | 13 | 0.04 | 87 | 72 | 52 |
| Example 1-66 | 0.05 | formula (I-21) | Li⁺ | 12.55 | 0.004 | 87.45 | 71 | 52 |
| Example 1-67 | 0.1 | formula (I-21) | Li⁺ | 12.6 | 0.008 | 87.4 | 74 | 47 |
| Example 1-68 | 1 | formula (I-21) | Li⁺ | 13.5 | 0.08 | 86.5 | 83 | 39 |
| Example 1-69 | 2 | formula (I-21) | Li⁺ | 14.5 | 0.16 | 85.5 | 84 | 38 |
| Example 1-70 | 5 | formula (I-21) | Li⁺ | 17.5 | 0.4 | 82.5 | 85 | 36 |
| Example 1-71 | 10 | formula (I-21) | Li⁺ | 22.5 | 0.8 | 77.5 | 87 | 32 |
| Example 1-72 | 15 | formula (I-21) | Li⁺ | 27.5 | 1.2 | 72.5 | 89 | 30 |
| Example 1-73 | 25 | formula (I-21) | Li⁺ | 37.5 | 2 | 62.5 | 90 | 29 |
| Example 1-74 | 40 | formula (I-21) | Li⁺ | 52.5 | 3.2 | 47.5 | 89 | 28 |
| Example 1-75 | 60 | formula (I-21) | Li⁺ | 72.5 | 4.8 | 27.5 | 88 | 27 |
| Example 1-76 | 15 | formula (I-21) | Na⁺ | 27.5 | 1.2 | 72.5 | 91 | 25 |
| Example 1-77 | 15 | formula (I-21) | K⁺ | 27.5 | 1.2 | 72.5 | 87 | 29 |
| Example 1-78 | 15 | formula (I-21) | Mg²⁺ | 27.5 | 1.2 | 72.5 | 88 | 31 |
| Example 1-79 | 15 | formula (I-21) | Ca²⁺ | 27.5 | 1.2 | 72.5 | 87 | 26 |
| Example 1-80 | 15 | formula (I-21) | Zn²⁺ | 27.5 | 1.2 | 72.5 | 83 | 27 |
| Comparative example 1-1 | / | / | / | 12.5 | / | 87.5 | 60 | 65 |
| Comparative example 1-2 | 65 | formula (I-21) | Li⁺ | 77.5 | 5.2 | 22.5 | 63 | 37 |
| Comparative example 1-3 | 0.005 | formula (I-21) | Li⁺ | 12.505 | 0.0004 | 87.495 | 67 | 54 |

| | | | | | | | | |
|---|---|---|---|---|---|---|---|---|
| Note: "/"in Table 1 indicates that there are no relevant parameters. | | | | | | | | |

From Examples 1-1 to 1-75 and Comparative examples 1-1 to 1-3, it can be seen that the lithium-ion batteries have a higher cycling capacity retention rate and lower high-temperature storage swelling rate when the electrolyte containing the additive A is applied to the lithium-ion batteries, indicating that the lithium-ion batteries have better high-temperature cycling performance and high-temperature storage performance.

From Examples 1-76 and 1-77, it can be seen that the secondary batteries have a relatively high cycling capacity retention rate and relatively low high-temperature storage swelling rate when the electrolyte including the additive A is applied to the sodium-ion battery or the potassium-ion battery, indicating that the secondary batteries have good high-temperature cycling performance and high-temperature storage performance.

From Examples 1-72, and 1-78 to 1-80, it can be seen that the lithium-ion batteries have a good cycling capacity retention rate and relatively low high-temperature storage swelling rate when the additive A including cations within the range defined in this application is applied to the lithium-ion batteries, indicating that the lithium-ion batteries have good high-temperature cycling performance and high-temperature storage performance.

From Examples 1-66 to 1-75 and Comparative examples 1-2, it can be seen that when X is too large, the lithium-ion batteries have a relatively low cycling capacity retention rate despite having a high-temperature storage swelling rate, indicating that the lithium-ion batteries cannot take both the cycling performance and the high-temperature storage performance into account when x is too large. From Examples 1-66 to 1-75 and Comparative examples 1-3, it can be seen that when x is too small, the lithium-ion batteries have a relatively low cycling capacity retention rate and relatively high high-temperature storage swelling rate, indicating that the high-temperature storage performance and high-temperature cycling performance of the lithium-ion batteries cannot be improved when x is too small. When x satisfies 0.01 ≤ x ≤ 60, the lithium-ion batteries have a higher cycling capacity retention rate and lower high-temperature storage swelling rates, where when x satisfies 0.1 ≤ x ≤ 25, the lithium-ion battery can have a even higher cycling capacity retention rate and lower high-temperature storage swelling rate, and further addition of the additive A does not further improve the performance of the lithium-ion battery. Therefore, with x controlled within the range defined in this application, the lithium-ion batteries have a higher cycling capacity retention rate and lower high-temperature storage swelling rate. In other words, the lithium-ion batteries have better high-temperature cycling performance and high-temperature storage performance.

**Table 2**

| | x | Type of lithium salt | y | x+y | x/y | Percentage of non-aqueous organic solvent (%) | Discharge capacity retention rate at 2C (%) | Cycling capacity retention rate (%) | High-temperature storage swelling rate (%) |
|---|---|---|---|---|---|---|---|---|---|
| Example 1-67 | 0.1 | LiPF₆ | 12.5 | 12.6 | 0.008 | 87.4 | 80.3 | 74 | 47 |
| Example 1-68 | 1 | LiPF₆ | 12.5 | 13.5 | 0.08 | 86.5 | 81.2 | 83 | 39 |
| Example 1-70 | 5 | LiPF₆ | 12.5 | 17.5 | 0.4 | 82.5 | 85.4 | 85 | 36 |
| Example 1-71 | 10 | LiPF₆ | 12.5 | 22.5 | 0.8 | 77.5 | 86.3 | 87 | 32 |
| Example 1-72 | 15 | LiPF₆ | 12.5 | 27.5 | 1.2 | 72.5 | 84.2 | 89 | 30 |
| Example 1-73 | 25 | LiPF₆ | 12.5 | 37.5 | 2 | 62.5 | 78.4 | 90 | 29 |
| Example 1-75 | 60 | LiPF₆ | 12.5 | 72.5 | 4.8 | 27.5 | 70.0 | 88 | 27 |
| Example 2-1 | 0.01 | LiPF₆ | 12.5 | 12.51 | 0.0008 | 87.49 | 78.3 | 72 | 53 |
| Example 2-2 | 40 | LiPF₆ | 7.5 | 47.5 | 5.3333 | 52.5 | 70.1 | 90 | 28 |
| Example 2-3 | 25 | LiPF₆ | 7.5 | 32.5 | 3.3333 | 67.5 | 75.4 | 91 | 29 |
| Example 2-4 | 18 | LiPF₆ | 8.75 | 26.75 | 2.0571 | 73.25 | 76.4 | 91 | 31 |
| Example 2-5 | 12 | LiPF₆ | 10 | 22 | 1.2 | 78 | 80.2 | 90 | 33 |
| Example 2-6 | 6 | LiPF₆ | 11.25 | 17.25 | 0.5333 | 82.75 | 77.5 | 87 | 37 |
| Example 2-7 | 2.5 | LiPF₆ | 7.5 | 10 | 0.3333 | 90 | 73.5 | 85 | 38 |
| Example 2-8 | 40 | LiFSI | 9.24 | 49.24 | 4.3290 | 50.76 | 70.5 | 91 | 30 |
| Example 2-9 | 25 | LiFSI | 9.24 | 34.24 | 2.7056 | 65.76 | 87.3 | 90 | 31 |
| Example 2-10 | 18 | LiFSI | 10.78 | 28.78 | 1.6697 | 71.22 | 86.4 | 90 | 33 |
| Example 2-11 | 12 | LiFSI | 12.32 | 24.32 | 0.9740 | 75.68 | 88.7 | 89 | 34 |
| Example 2-12 | 6 | LiFSI | 13.86 | 19.86 | 0.4329 | 80.14 | 89.1 | 86 | 39 |
| Example 2-13 | 25 | LiFSI | 23 | 48 | 1.0869 | 52 | 86.5 | 84 | 32 |
| Example 2-14 | 25 | LiFSI | 12.5 | 37.5 | 2 | 62.5 | 79.1 | 87 | 29 |
| Example 2-15 | 25 | LiDFOB | 12.5 | 37.5 | 2 | 62.5 | 75.2 | 81 | 35 |
| Comparative example 2-1 | 65 | LiPF₆ | 10.5 | 75.5 | 6.19 | 24.5 | 58.5 | 64 | 28 |
| Comparative example 1-2 | 65 | LiPF₆ | 12.5 | 77.5 | 5.2 | 22.5 | 53.7 | 63 | 37 |

The mass percentage y% of lithium salt generally affects the high-temperature storage performance, high-temperature cycling performance, and kinetic performance of lithium-ion batteries. From Examples 1-73, 2-3, and 2-13, it can be seen that when the value of y is within the range defined in this application, the lithium-ion batteries have a relatively low high-temperature storage swelling rate and a relatively high cycling capacity retention rate and discharge capacity retention rate at 2C, indicating that the lithium-ion batteries have good high-temperature storage performance, high-temperature cycling performance, and kinetic performance.

The type of lithium salt generally affects the high-temperature storage performance, high-temperature cycling performance, and kinetic performance of lithium-ion batteries. From Examples 1-73, 2-14, and 2-15, it can be seen that lithium-ion batteries with lithium salts within the range defined in this application have a relatively low high-temperature storage swelling rate and a relatively high cycling capacity retention rate and discharge capacity retention rate at 2C, indicating that the lithium-ion batteries have good high-temperature storage performance, high-temperature cycling performance, and kinetic performance.

The value of x+y generally affects the high-temperature storage performance, high-temperature cycling performance, and kinetic performance of lithium-ion batteries. From Examples 1-67 and 1-68, 1-70 to 1-73, 1-75, 2-1 to 2-15, Comparative example 2-1, and Comparative example 1-2, it can be seen that when the value of x+y is within the range defined in this application, the lithium-ion batteries have a relatively low high-temperature storage swelling rate and a higher cycling capacity retention rate and discharge capacity retention rate at 2C, indicating that the lithium-ion batteries have good high-temperature storage performance and better high-temperature cycling performance and kinetic performance.

The value of x/y generally affects the high-temperature storage performance, high-temperature cycling performance, and kinetic performance of lithium-ion batteries. From Examples 1-67 and 1-68, 1-70 to 1-73, 1-75, 2-1 to 2-15, and Comparative Example 2-1, it can be seen that when x/y satisfies 0.008 ≤ x/y ≤ 6, lithium-ion batteries have a relatively low high-temperature storage swelling rate and even higher discharge capacity retention rate at 2C, where when x/y satisfies 0.008 ≤ x/y ≤ 4, the lithium-ion batteries have a relatively low high-temperature storage swelling rate and higher discharge capacity retention rate at 2C. Therefore, the value of x/y controlled within the range defined in this application can enable the lithium-ion batteries to have a relatively low high-temperature storage swelling rate and a higher cycling capacity retention rate and discharge capacity retention rate at 2C, indicating that the lithium-ion batteries have good high-temperature storage performance and better high-temperature cycling performance and kinetic performance.

The mass percentage of the non-aqueous organic solvent generally affects the high-temperature storage performance, high-temperature cycling performance, and kinetic performance of lithium-ion batteries. From Examples 1-67 and 1-68, 1-70 to 1-73, 1-75, 2-1 to 2-15, Comparative example 2-1, and Comparative example 1-2, it can be seen that the lithium-ion batteries with a mass percentage of the non-aqueous organic solvent within the range defined in this application have a relatively low high-temperature storage swelling rate and a higher cycling capacity retention rate and discharge capacity retention rate at 2C, indicating that the lithium-ion batteries have good high-temperature storage performance and better high-temperature cycling performance and kinetic performance.

**Table 3**

| | Type of cyclic carbonates | Type of linear carbonates/carboxylates | Mass ratio of cyclic carbonate to linear carbonate/carboxylate | High-temperature storage swelling rate (%) | Discharge capacity retention rate at 2C (%) |
|---|---|---|---|---|---|
| Example 1-75 | Ethylene carbonate | Diethyl carbonate | 3:7 | 29 | 72.6 |
| Example 3-1 | Ethylene carbonate | Dimethyl carbonate | 3:7 | 30 | 81.1 |
| Example 3-2 | Ethylene carbonate | Ethyl methyl carbonate | 3:7 | 29 | 78.4 |
| Example 3-3 | Ethylene carbonate | Methyl difluoroethyl carbonate | 3:7 | 26 | 76.5 |
| Example 3-4 | Ethylene carbonate | Methyl trifluoroethyl carbonate | 3:7 | 27 | 76.4 |
| Example 3-5 | Ethylene carbonate | Bis(2,2,2-trifluoroethyl) carbonate | 3:7 | 28 | 75.1 |
| Example 3-6 | Ethylene carbonate | Ethyl acetate | 3:7 | 30 | 81.2 |
| Example 3-7 | Ethylene carbonate | N-propyl acetate | 3:7 | 28 | 79.4 |
| Example 3-8 | Ethylene carbonate | Methyl propionate | 3:7 | 29 | 79.0 |
| Example 3-9 | Ethylene carbonate | Ethyl propionate | 3:7 | 28 | 78.8 |
| Example 3-10 | Ethylene carbonate | Propyl propionate | 3:7 | 26 | 75.2 |
| Example 3-11 | Ethylene carbonate | Methyl tert-butyrate | 3:7 | 27 | 78.9 |
| Example 3-12 | Ethylene carbonate | Ethyl tert-butyrate | 3:7 | 28 | 77 . 6 |
| Example 3-13 | Ethylene carbonate | 2,2-difluoroethyl acetate | 3:7 | 26 | 80.1 |
| Example 3-14 | Ethylene carbonate | 2,2,2-trifluoroethyl acetate | 3:7 | 27 | 79.5 |
| Example 3-15 | Ethylene carbonate | 2,2-difluoroethyl propionate | 3:7 | 26 | 79.1 |
| Example 3 to 16 | Ethylene carbonate | 2,2,2-trifluoroethyl propionate | 3:7 | 27 | 78.6 |
| Example 3-17 | Ethylene carbonate | Dimethyl carbonate | 1:9 | 31 | 80.1 |
| Example 3-18 | Ethylene carbonate | Dimethyl carbonate | 9:1 | 33 | 72.0 |
| Example 3-19 | Ethylene carbonate | Ethyl acetate | 1:9 | 32 | 80.5 |
| Example 3-20 | Ethylene carbonate | Ethyl acetate | 9:1 | 35 | 72.1 |

The type of non-aqueous organic solvent generally affects the high-temperature storage performance and kinetic performance of lithium-ion batteries. From Examples 1-75, and 3-1 to 3-16, it can be seen that the lithium-ion batteries with a type of non-aqueous organic solvent within the range defined in this application have a relatively low high-temperature storage swelling rate and a relatively high discharge capacity retention rate at 2C, indicating that the lithium-ion batteries have good high-temperature storage performance and kinetic performance.

The mass ratio of constituents of non-aqueous organic solvent generally affects the high-temperature storage performance and kinetic performance of lithium-ion batteries. From Examples 3-1, 3-17, and 3-18, it can be seen that the lithium-ion batteries with a mass ratio of the cyclic carbonate compound to the linear carbonate compound within the range defined in this application have a relatively low high-temperature storage swelling rate and a relatively high discharge capacity retention rate at 2C, indicating that the lithium-ion batteries have good high-temperature storage performance and kinetic performance. From Examples 3-6, 3-19, and 3-20, it can be seen that the lithium-ion batteries with a mass ratio of the cyclic carbonate compound to the linear carboxylate compound within the range defined in this application have a relatively low high-temperature storage swelling rate and a relatively high discharge capacity retention rate at 2C, indicating that the lithium-ion batteries have good high-temperature storage performance and kinetic performance.

It should be noted that the terms "include", "comprise", or any other variations thereof are intended to cover a non-exclusive inclusion, so that a process, a method, or an item including a set of elements not only includes those elements but also includes other elements that are not expressly listed, or further includes elements inherent to such process, method, or item.

Some embodiments in this specification are described in a related manner. For a part that is the same or similar between some embodiments, reference may be made between some embodiments. Each embodiment focuses on differences from other embodiments.

The foregoing descriptions are merely preferred examples of this application, and are not intended to limit the protection scope of this application. Any modification, equivalent replacement, improvement, or the like made without departing from the spirit and principle of this application shall fall within the protection scope of this application.

## Claims

1. An electrolyte for secondary batteries, comprising a non-aqueous organic solvent and an additive A, **characterized in that**, the additive A comprises a salt composed of anions and cations represented by formula (I); 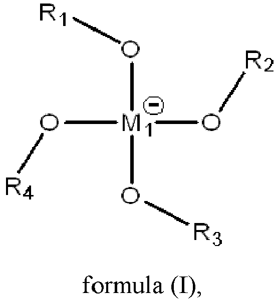
wherein Mi is selected from group IIIA elements; and Ri to R₄ are each independently selected from Ci-Cs alkyl with at least some hydrogen atoms substituted by fluorine, C₆-C₂₀ aryl with at least some hydrogen atoms substituted by fluorine, C₇-C₂₂ aralkyl with at least some hydrogen atoms substituted by fluorine, C₇-C₂₀ alkylaryl with at least some hydrogen atoms substituted by fluorine, C₇-C₂₀ alkylaryl containing ether bond with at least some hydrogen atoms substituted by fluorine, or C₂-C₁₀ alkyl containing ether bond with at least some hydrogen atoms substituted by fluorine;
two adjacent groups in Ri to R₄ are capable of being linked into a ring;
the cations comprise any one of Li⁺, Na⁺, K⁺, Mg²⁺, Ca²⁺, and Zn²⁺; and
based on a mass of the electrolyte, a mass percentage of the additive A is x%, and 0.01 ≤ x ≤ 60.

2. The electrolyte according to claim 1, **characterized in that**, Mi is selected from Al or B, and the cations comprise Li⁺.

3. The electrolyte according to claim 1, **characterized in that**, 0.1 ≤ x ≤ 25.

4. The electrolyte according to claim 1, **characterized in that**, Ri to R₄ are each independently selected from the following groups:

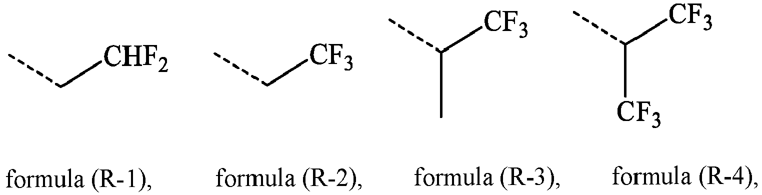

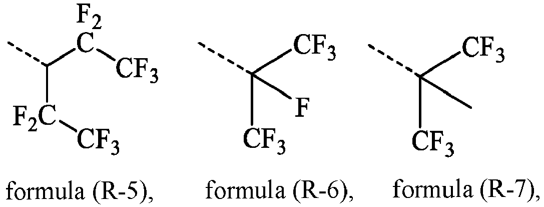

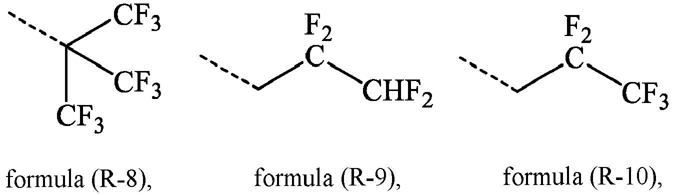

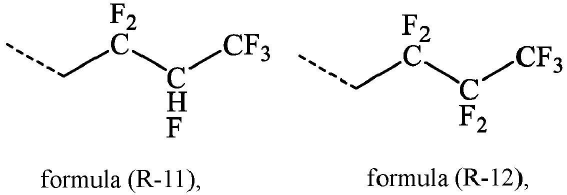

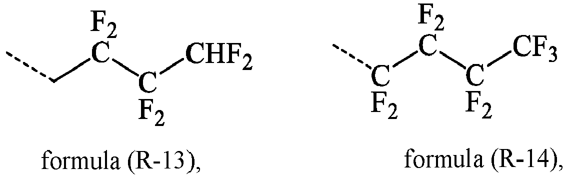

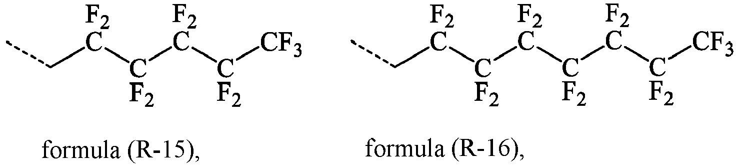

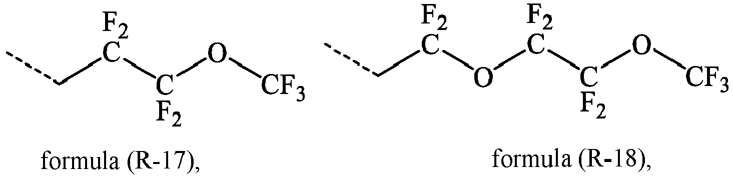

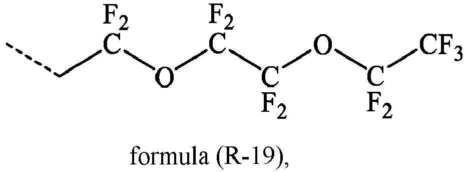

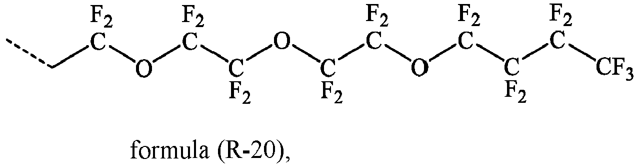

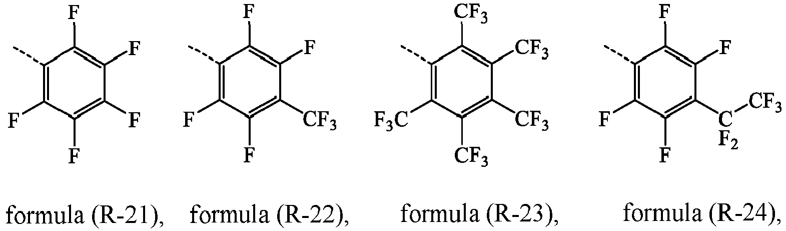

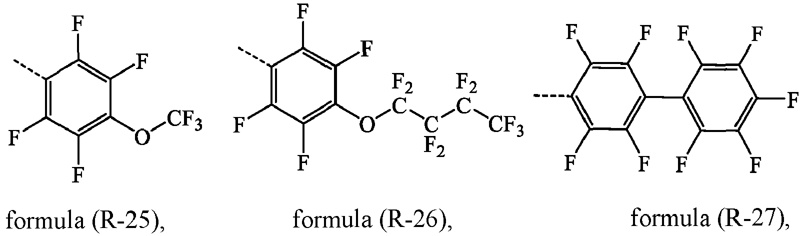

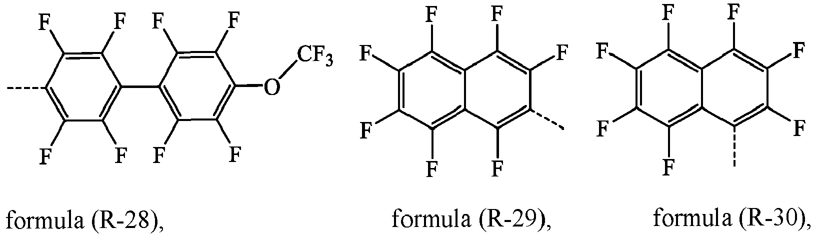

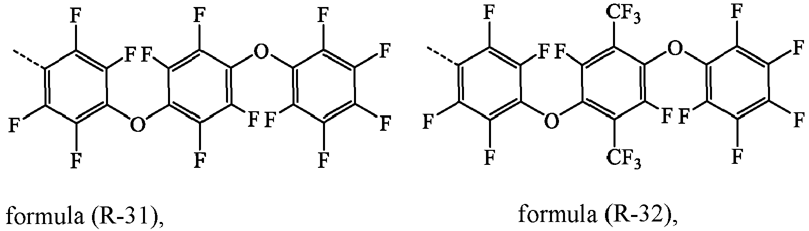

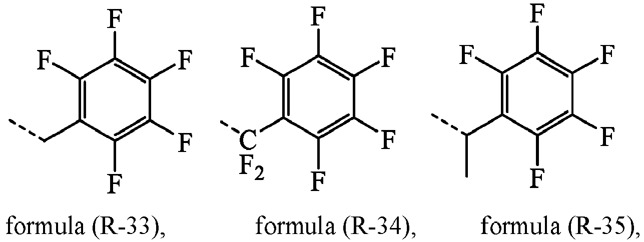

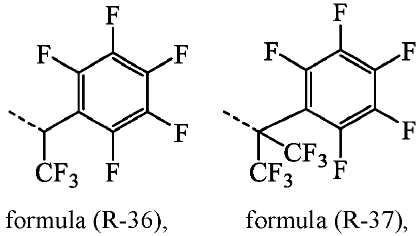

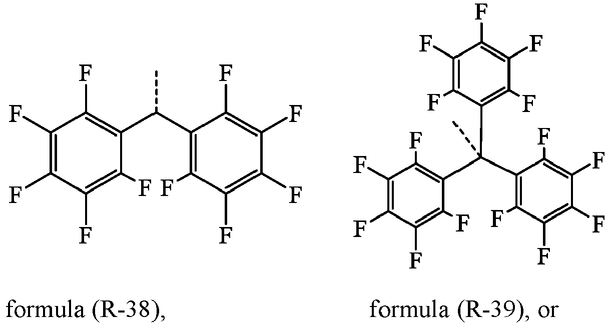

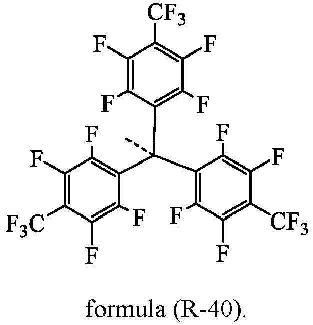

5. The electrolyte according to claim 1, **characterized in that**, two adjacent groups from Ri to R₄ are linked to form a ring and are each independently selected from the following groups:

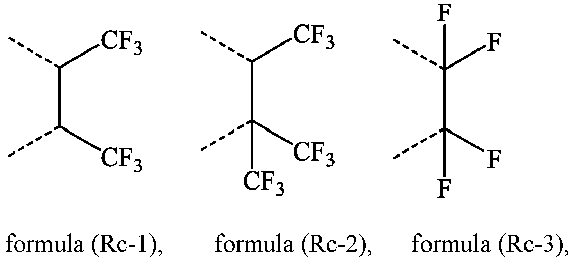

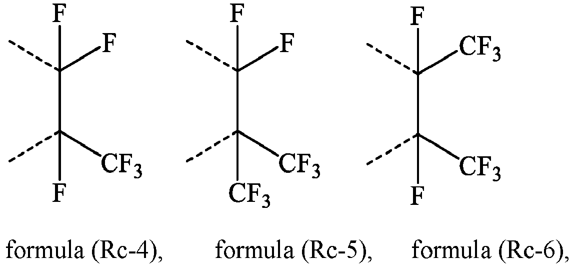

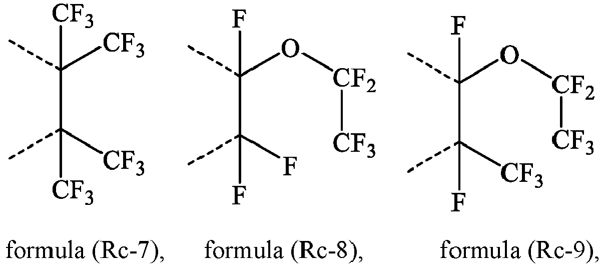

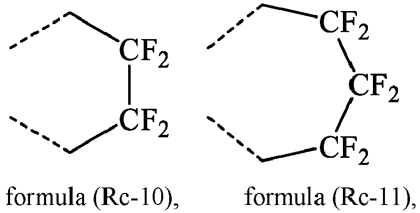

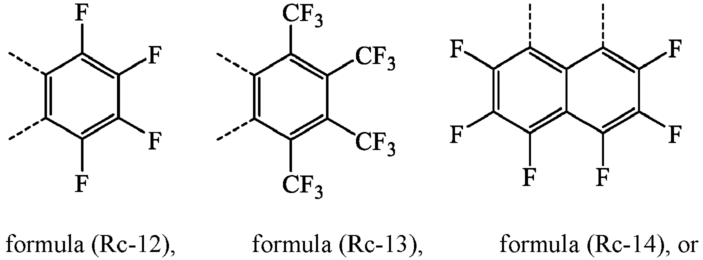

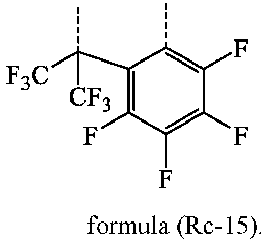

6. The electrolyte according to claim 1, **characterized in that**, the anions represented by formula (I) comprise at least one of the following anions:

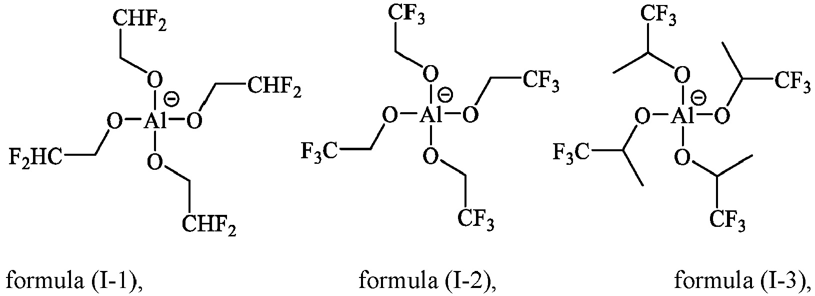

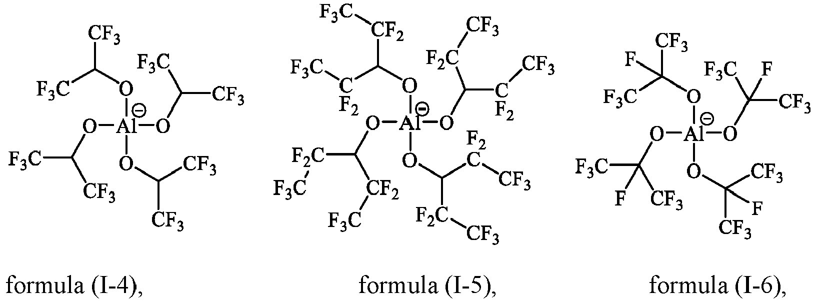

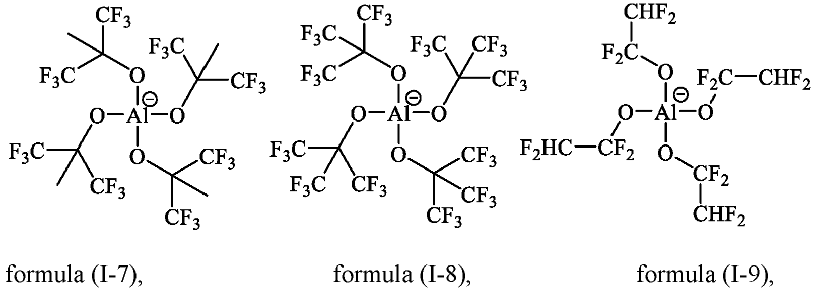

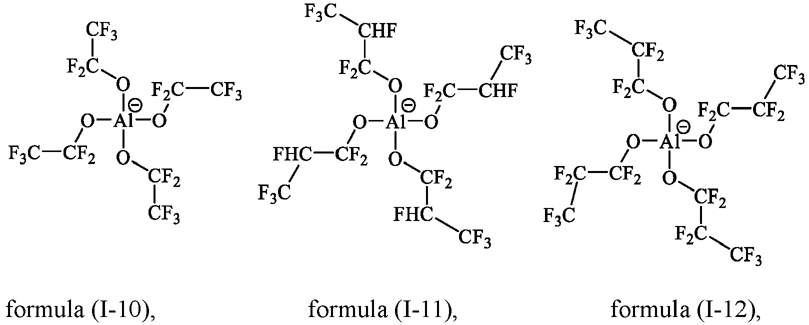

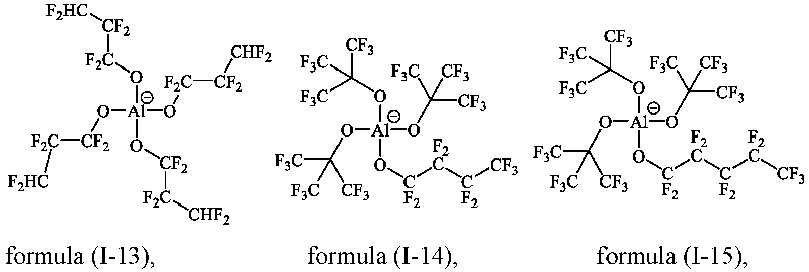

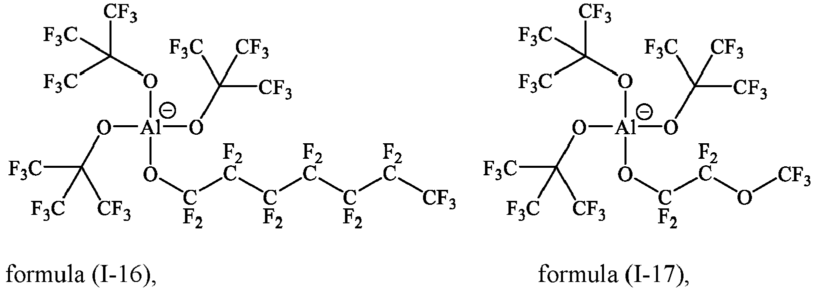

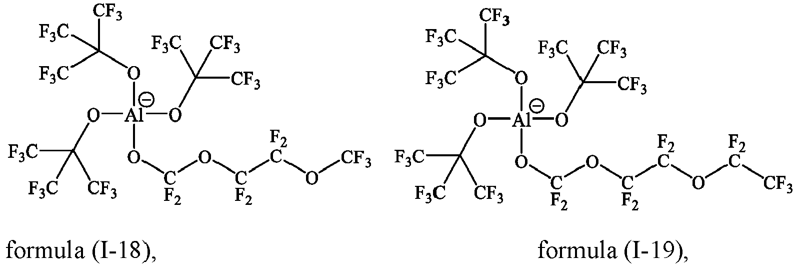

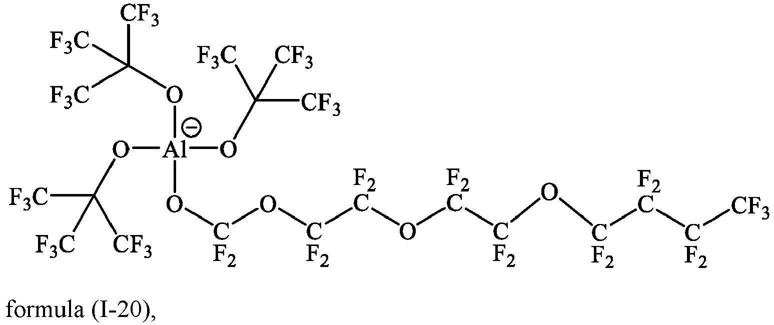

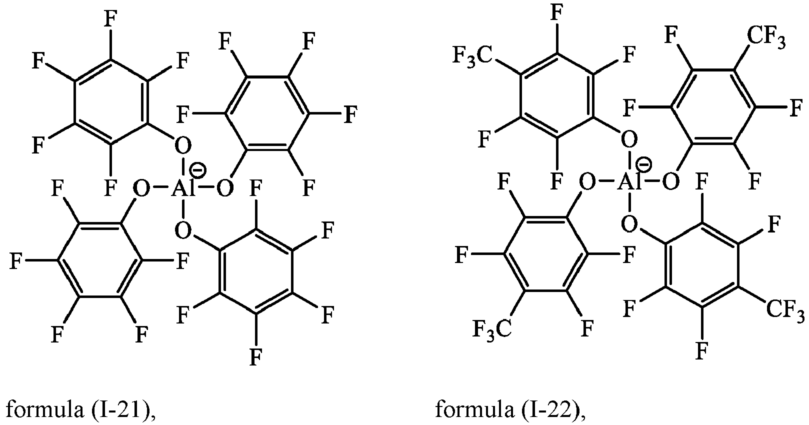

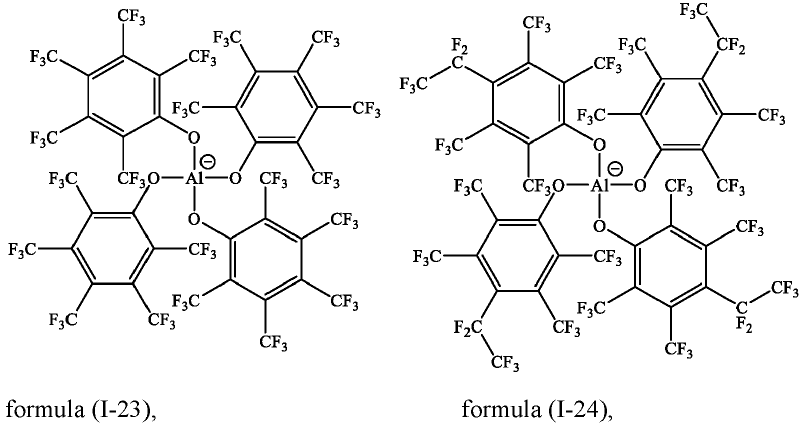

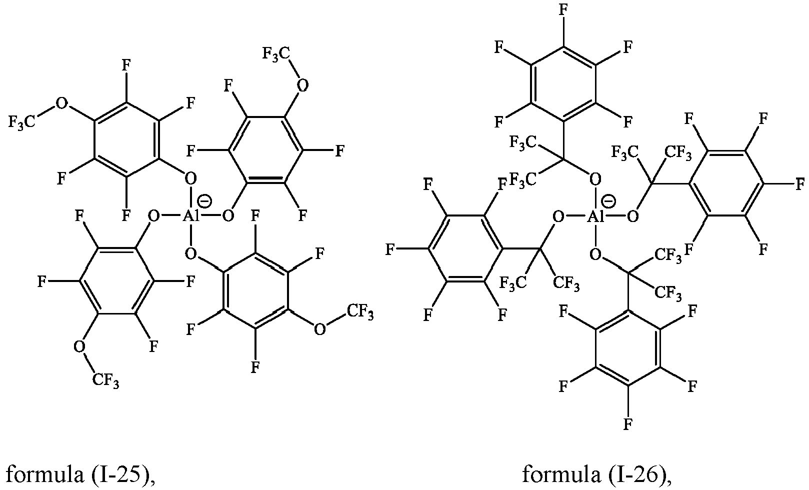

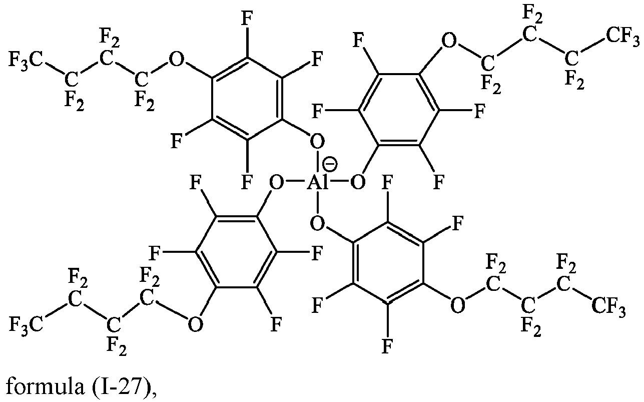

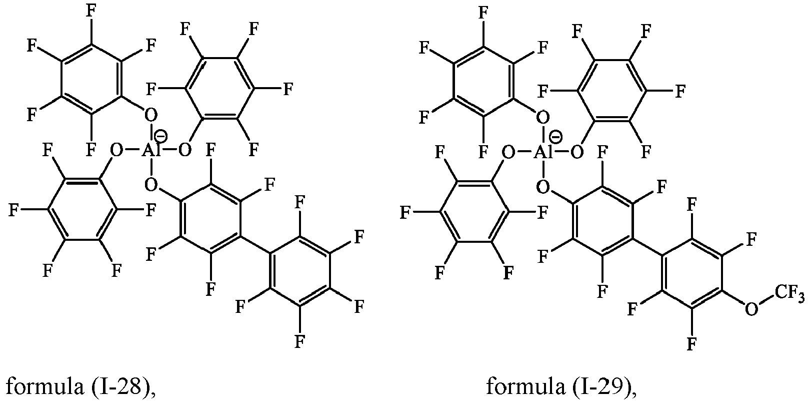

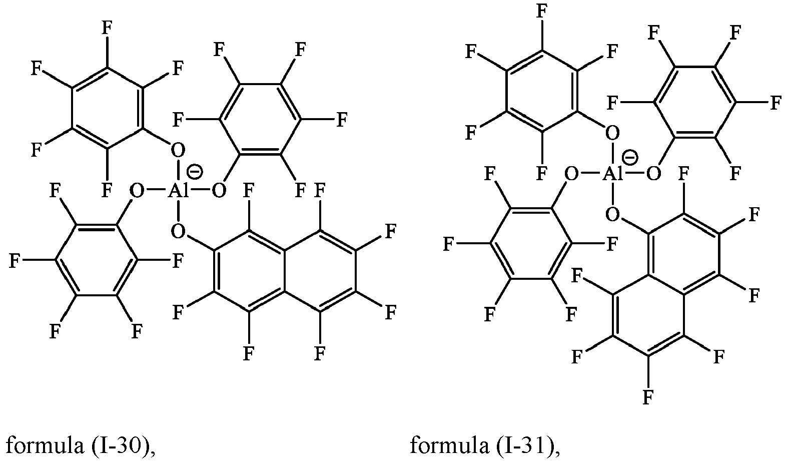

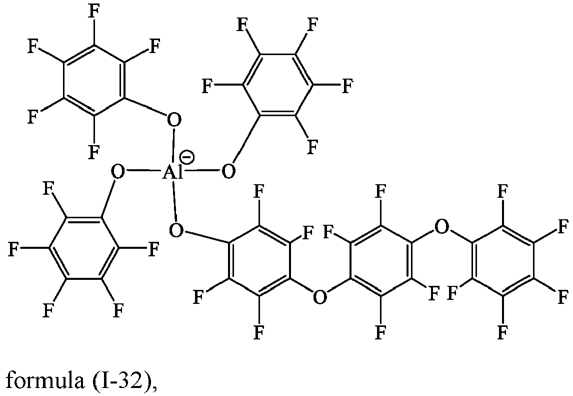

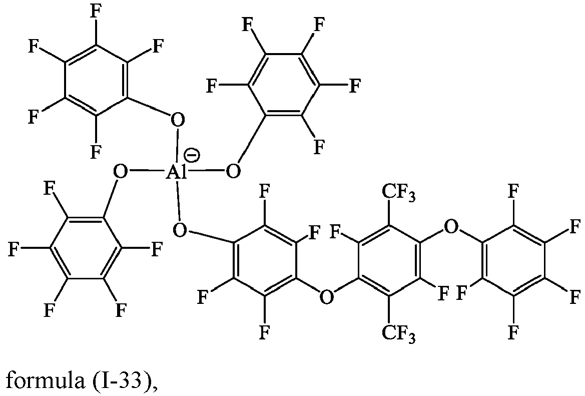

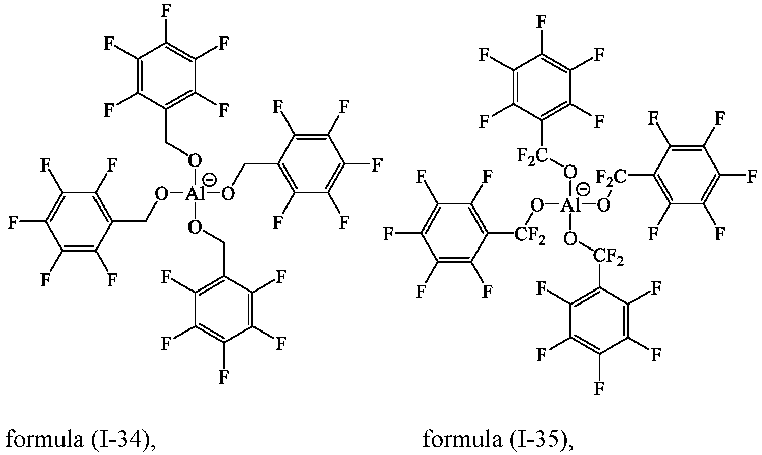

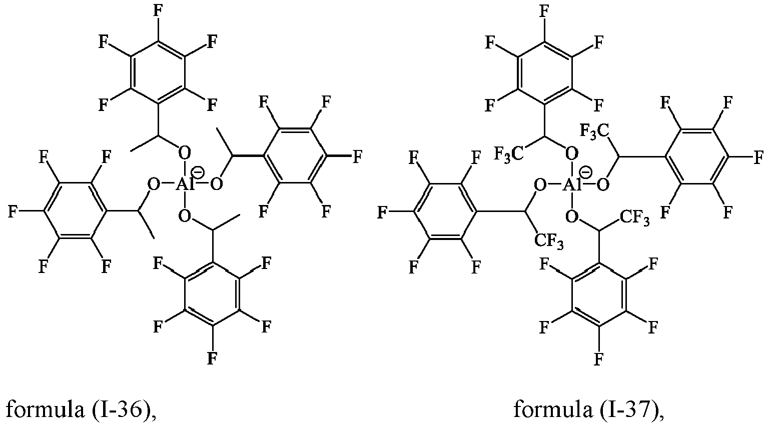

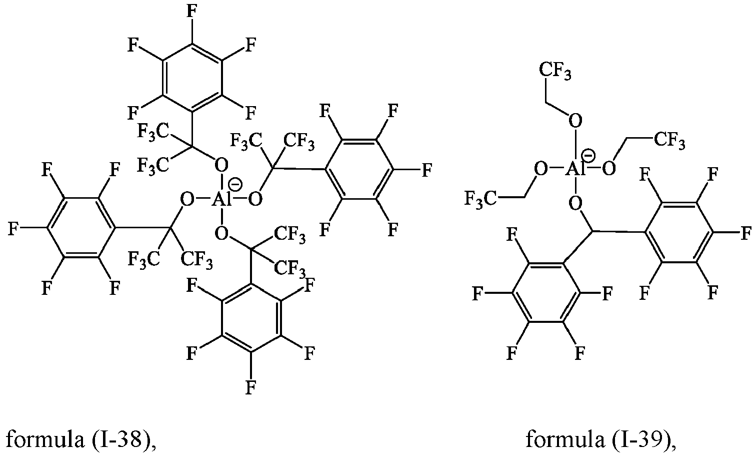

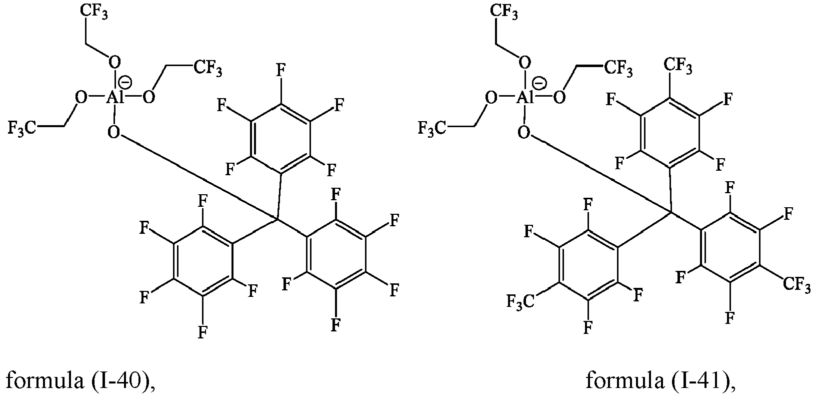

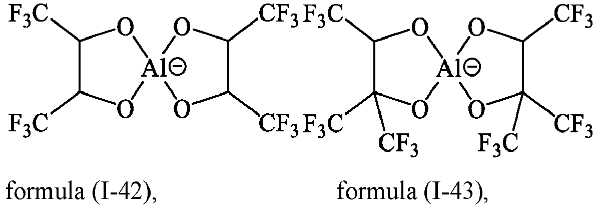

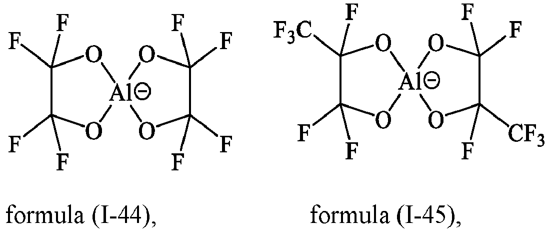

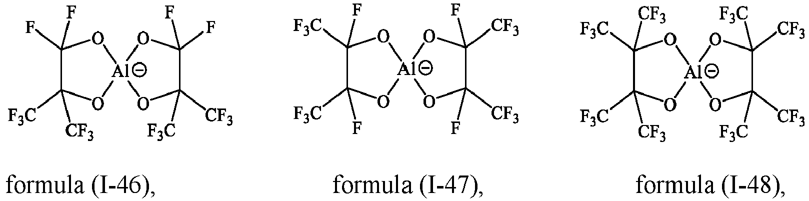

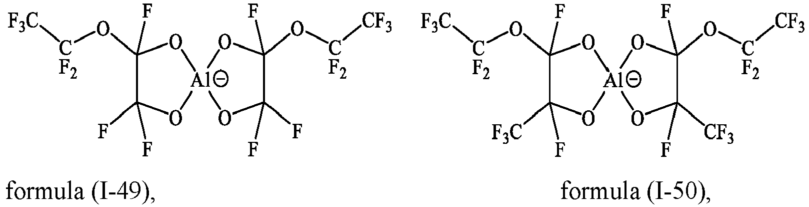

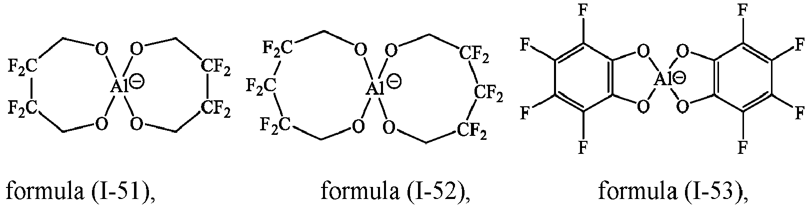

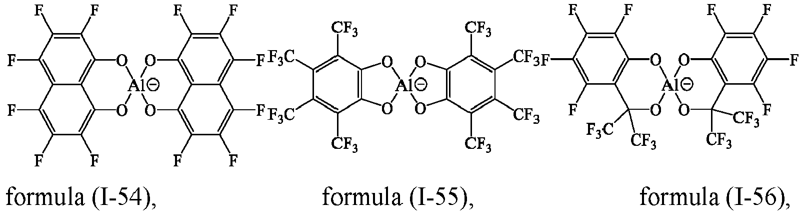

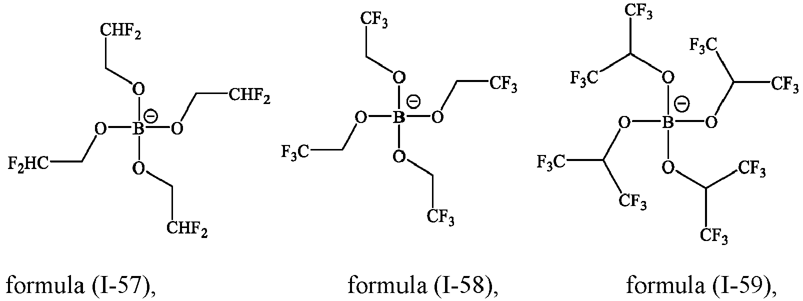

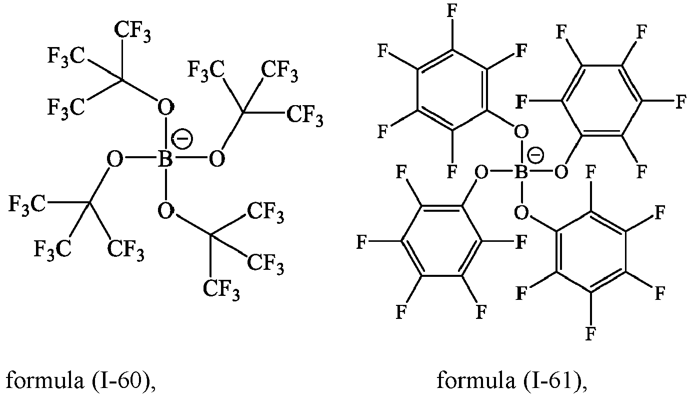

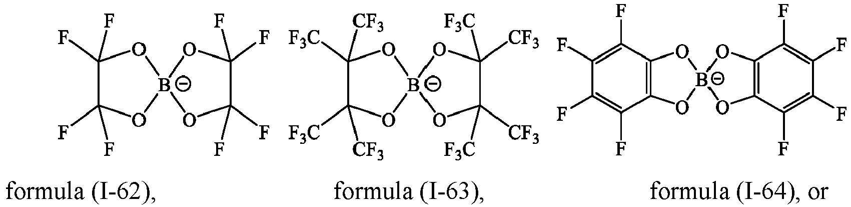

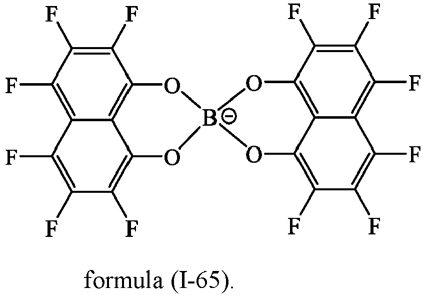

7. The electrolyte according to claim 1, **characterized in that**, the electrolyte further comprises a lithium salt, the lithium salt comprising at least one of lithium hexafluorophosphate, lithium bis(fluorosulfonyl)imide, lithium bis(trifluoromethylsulfonyl)imide, lithium bis(oxalato)borate, lithium difluoro(oxalato)borate, lithium difluorophosphate, lithium tetrafluoroborate, lithium nitrate, lithium hexafluoroantimonate, lithium hexafluoroarsenate, lithium bis(trifluoromethanesulfonyl)imide, lithium bis(pentafluoroethylsulfonyl)imide, lithium tris(trifluoromethanesulfonyl)methyl, lithium difluoro(oxalato)phosphate, or lithium tetrafluoro(oxalato)phosphate; and
based on the mass of the electrolyte, a mass percentage of the lithium salt is y%, and 7.5 ≤ y ≤ 23.

8. The electrolyte according to claim 7, **characterized in that**, the lithium salt comprises at least one of lithium hexafluorophosphate or lithium bis(fluorosulfonyl)imide.

9. The electrolyte according to claim 7, **characterized in that**, 10 ≤ x+y ≤ 75.

10. The electrolyte according to claim 7, **characterized in that**, 0.0008 ≤ x/y ≤ 6.

11. The electrolyte according to claim 7, **characterized in that**, 0.0008 ≤ x/y ≤ 4.

12. The electrolyte according to claim 1, **characterized in that**, the non-aqueous organic solvent comprises at least one of a cyclic carbonate compound, a linear carbonate compound, a carboxylic acid cyclic lactone compound, a linear carboxylate compound, a fluorinated cyclic carbonate compound, a fluorinated linear carbonate compound, or a fluorinated linear carboxylate compound; and
based on the mass of the electrolyte, a mass percentage of the non-aqueous organic solvent is 25% to 90%.

13. The electrolyte according to claim 1, **characterized in that**, the non-aqueous organic solvent comprises a cyclic carbonate compound and a linear carbonate compound, and a mass ratio of the cyclic carbonate compound to the linear carbonate compound is 1:9 to 9:1; and
based on the mass of the electrolyte, a mass percentage of the non-aqueous organic solvent is 25% to 90%.

14. The electrolyte according to claim 1, **characterized in that**, the non-aqueous organic solvent comprises a cyclic carbonate compound and a linear carboxylate compound, and a mass ratio of the cyclic carbonate compound to the linear carboxylate compound is 1:9 to 9:1; and
based on the mass of the electrolyte, a mass percentage of the non-aqueous organic solvent is 25% to 90%.

15. A secondary battery comprising a positive electrode plate, a negative electrode plate, and the electrolyte according to any one of claims 1 to 14.

16. The secondary battery according to claim 15, **characterized in that**, the negative electrode plate comprises a negative electrode current collector and a negative electrode active material layer disposed on at least one surface of the negative electrode current collector, the negative electrode active material layer comprises a negative electrode active material, and the negative electrode active material comprises a silicon-based material.
